# EUROPÄISCHE PATENTSCHRIFT

(11) **EP 2 812 838 B1**
(45) Veröffentlichungstag und Bekanntmachung des Hinweises auf die Patenterteilung: **12.12.2018**
(21) Anmeldenummer: 13701948.5
(22) Anmeldetag: 18.01.2013
(51) Int. Cl.: G06F 21/57, G06F 21/44, G06F 21/70, G06Q 50/06, H04W 4/00, H04L 9/32, H04L 29/06, H04W 4/20

(54) **VERFAHREN ZUR INITIALISIERUNG EINES SPEICHERBEREICHS, WELCHER EINEM SMART-METER ZUGEORDNET IST**
METHOD FOR INITIALIZING A MEMORY AREA THAT IS ASSOCIATED WITH A SMART METER
PROCÉDÉ D'INITIALISATION D'UNE ZONE DE MÉMOIRE ASSOCIÉE À UN COMPTEUR INTELLIGENT

(30) Priorität: 07.02.2012 DE 102012201810; 02.03.2012 DE 102012203356
(43) Veröffentlichungstag der Anmeldung: 17.12.2014
(73) Patentinhaber: Bundesdruckerei GmbH, 10969 Berlin (DE)
(72) Erfinder: DIETRICH, Frank, 12437 Berlin (DE); PAESCHKE, Manfred, 16348 Wandlitz (DE)
(74) Vertreter: Richardt Patentanwälte PartG mbB
(86) Internationale Anmeldenummer: PCT/EP2013/050907
(87) Internationale Veröffentlichungsnummer: WO 2013/117407

(56) Entgegenhaltungen:
- BARRIGA L ET AL: "M2M Remote-Subscription Management", INTERNET CITATION, 2. Mai 2011 (2011-05-02), Seiten 1-6, XP002686983, Gefunden im Internet: URL:http://www.ericsson.com/res/thecompany /docs/publications/ericsson_review/2011/m2 m_remotesubscriptions.pdf [gefunden am 2012-11-12]
- "3rd Generation Partnership Project; Technical Specification Group Services and System Aspects; Feasibility study on the security aspects of remote provisioning and change of subscription for Machine to Machine (M2M) equipment (Release 9)", 3GPP STANDARD; 3GPP TR 33.812, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Nr. V9.2.0, 22. Juni 2010 (2010-06-22), Seiten 1-87, XP050441986, [gefunden am 2010-06-22]
- "ETSI TS 102 689 V1.1.1 Machine-to-Machine communications (M2M); M2M service requirements", , 3. August 2010 (2010-08-03), XP055058237, Gefunden im Internet: URL:http://www.etsi.org/deliver/etsi_ts/10 2600_102699/102689/01.01.01_60/ts_102689v0 10101p.pdf [gefunden am 2013-04-02]
- "ETSI TS 102 690 V1.1.1 Machine-to-Machine communications (M2M); Functional architecture", , 1. Oktober 2011 (2011-10-01), XP055057930, Gefunden im Internet: URL:http://www.etsi.org/deliver/etsi_ts/10 2600_102699/102690/01.01.01_60/ts_102690v0 10101p.pdf [gefunden am 2013-03-27]
- "ETSI TS 102 691 V1.1.1 Machine-to-Machine communications (M2M); Smart Metering Use Cases", , 18. Mai 2010 (2010-05-18), XP055058238, Gefunden im Internet: URL:http://www.etsi.org/deliver/etsi_tr/10 2600_102699/102691/01.01.01_60/tr_102691v0 10101p.pdf [gefunden am 2013-04-02]
- "Technische Richtlinie BSI TR‐03109 Version 0.20", , 10 October 2011 (2011-10-10), XP055059493, Retrieved from the Internet: URL:https://www.internet-sicherheit.de/ins titut/service/glossar/allgemeine-studien/b si-studien/?eID=dam_frontend_push&docID=26 40 [retrieved on 2013-04-12]
- "TECHNISCHE RICHTLINIE BSI TR-03109 Anhang B", , 24 November 2011 (2011-11-24), XP055059481, Retrieved from the Internet: URL:https://www.internet-sicherheit.de/ins titut/service/glossar/allgemeine-studien/b si-studien/?eID=dam_frontend_push&docID=26 42 [retrieved on 2013-04-12]

## Beschreibung

Die Erfindung betrifft ein Verfahren zur Initialisierung eines Speicherbereichs, wobei der Speicherbereich einem Smart-Meter zugeordnet ist, ein Computerprogrammprodukt und ein Sicherheitsmodul, sowie ein Computersystem zur Initialisierung eines Speicherbereichs, wobei der Speicherbereich einem Smart-Meter zugeordnet ist.

Unter dem Begriff des "Smart Metering" wird allgemein der Gedanke verstanden, Kunden mit elektronischen Energieverbrauchserfassungsgeräten auszustatten, um so neben einer einfachen Erfassung der verbrauchten Energiemenge zum Beispiel über ein Netzwerk sowohl dem Kunden als auch dem Energieversorger weitere Funktionalitäten zur Verfügung zu stellen.

Möglich ist dabei, dass sich der Kunde in Echtzeit über seinen aktuellen Energieverbrauch informieren kann. Unter dem Begriff des "Energieverbrauchs" wird dabei der Verbrauch des Kunden bezüglich jeglicher Art von Energie verstanden, welche in Haushalte und Unternehmen geliefert wird. Dies umfasst neben den Energieformen Strom, Wasser und Gas auch beliebige weitere Energieformen wie beispielsweise Fernwärme.

Zur Erfassung des Energieverbrauchs kommen beim jeweiligen Verbraucher intelligente Messsysteme, auch intelligente Zähler oder "Smart-Meter" genannt, zum Einsatz. Smart-Meter sind Zähler für die verbrauchte Energie. Der Verbraucher kann dabei eine natürliche oder juristische Person sein, welche verschiedene messbare Energieformen wie Strom, Gas, Wasser oder Wärme verbraucht. Ziel der Verwendung von Smart-Metern ist die Implementierung intelligenter Messsysteme, was beispielsweise die Erhebung von variablen Leistungsentgelten in Abhängigkeit von Gesamtnachfrage und Netzauslastung ermöglichen würde. Dadurch können sich Energieversorgungsnetze insgesamt besser ausnutzen lassen.

Aus der technischen Richtlinie des BSI TR-03109 ist es bekannt, einen sogenannten Smart-Meter-Gateway, auch Konzentrator genannt, als eine zentrale Kommunikationseinheit vorzusehen, welche mit einzelnen oder mehreren Smart-Metern kommunizieren kann. Der Gateway ist dazu in der Lage, mit Geräten im sogenannten "Home Area Network" und mit Geräten im "Wide Area Network" zu kommunizieren. Das Home Area Network umfasst dabei alle Smart Meter, welche an den Gateway angekoppelt sind, sowie z.B. private Recheneinheiten der Verbraucher. Die privaten Recheneinheiten können z.B. zur Information über aktuelle, mit den Smart Metern erfasste Energieverbrauchswerte, eingesetzt werden. Das Wide Area Network ist dazu ausgebildet, um eine Kommunikation von Gateway und autorisierten Marktteilnehmern zu ermöglichen. Beispielsweise kann das Gateway die Daten aller Smart-Meter sammeln und diese an eine übergeordnete Sammelstelle, beispielsweise einen Energieversorger oder einen Messstellenbetreiber zur Verfügung stellen.

Allgemein gibt die technische Richtlinie des BSI TR-03109 Version 0.2 eine technische Empfehlung zur Implementierung der Kommunikation von Smart Meter Gateways und behandelt die Sicherheitsaspekte und Interoperabilität bei der Kommunikation mit der Infrastruktur eines solchen Gateways. Anhang B zur technische Richtlinie des BSI TR-03109 beschreibt das Sicherheitsmodul eines Smart Metering Gateways. Dabei fokussiert sich der Anhang B auf die vom Sicherheitsmodul bereitzustellende Funktionalität in seiner Betriebsphase, um eine Interoperabilität zwischen den Sicherheitsmodulen verschiedener Hersteller zu gewährleisten.

BARRIGAL ET AL: "M2M Remote-Subscription Management", INTERNET CITATION, 2. Mai 2011, Seiten 1-6, beschreibt Maschine-zu-Maschine(M2M)-Kommunikations-Identitätsmodule und deren Anwendung. Insbesondere werden Möglichkeiten zur Fernwartung solcher Module beschrieben.

"3rd Generation Partnership Project; Technical Specification Group Services and System Aspects; Feasibility study on the security aspects of remote provisioning and change of subscription for Machine to Machine (M2M) equipment (Release 9)", 3GPP STANDARD; 3GPP TR 33.812, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, Nr. V9.2.0, 22. Juni 2010, Seiten 1-87, beschreibt Sicherheitsaspekte und Möglichkeiten zur Fernwartung von M2M-Geräten.

"ETSI TS 102 689 V1.1.1 Machine-to-Machine communications (M2M); M2M service requirements", 3. August 2010, beschreibt als technische Richtlinie des Europäische Institut für Telekommunikationsnormen Anforderungen an M2M-Dienste. "ETSI TS 102 690 V1.1.1 Machine-to-Machine communications (M2M); Functional architecture", 1. Oktober 2011, beschreibt als technische Richtlinie des Europäische Institut für Telekommunikationsnormen Anforderungen an eine M2M-Architektur. "ETSI TS 102 691 V1.1.1 Machine-to-Machine communications (M2M); Smart Metering Use Cases", 18. Mai 2010, beschreibt als technische Richtlinie des Europäische Institut für Telekommunikationsnormen Anwendungsfälle für Smart Meter.

Der Erfindung liegt die Aufgabe zugrunde, ein Verfahren zur Initialisierung eines Speicherbereichs, welcher einem Smart-Meter zugeordnet ist, ein Computerprogrammprodukt, ein Sicherheitsmodul und ein Computersystem zur Initialisierung eines Speicherbereichs, welches einem Smart-Meter zugeordnet ist, bereitzustellen.

Die der Erfindung zugrunde liegenden Aufgaben werden mit den Merkmalen der unabhängigen Patentansprüche gelöst. Bevorzugte Ausführungsformen der Erfindung sind in den abhängigen Patentansprüchen angegeben.

Es wird ein Verfahren zur Initialisierung eines Speicherbereichs geschaffen, wobei der Speicherbereich einem Smart Meter zugeordnet ist. Das Verfahren auf dem ersten Computersystem umfasst: Aufbau eines ersten Kommunikationskanals zwischen dem ersten Computersystem und einem Sicherheitsmodul, wobei das Sicherheitsmodul dem Speicherbereich zugeordnet ist, wobei das erste Computersystem einem über ein Netzwerk verbundenen Satz von Computersystemen zugeordnet ist, Authentifizierung des ersten Computersystems gegenüber dem Sicherheitsmodul, Senden von Daten von dem ersten Computersystem an das Sicherheitsmodul durch eine gesicherte Übertragung zur Speicherung der Daten durch das Sicherheitsmodul in dem Speicherbereich zur Initialisierung des Speicherbereichs nach erfolgreicher Authentifizierung des ersten Computersystems gegenüber dem Sicherheitsmodul, wobei durch die gesendeten Daten ein zweites Computersystem eines Energieversorgers und/oder Messstellenbetreibers spezifiziert wird, wobei durch die Spezifikation der Freischaltung einer Kommunikation zwischen dem Sicherheitsmodul und dem zweiten Computersystem unter Umgehung des ersten Computersystems freigeschaltet wird, wobei das zweite Computersystem ein Computersystem aus dem Satz von Computersystemen ist.

Ferner wird ein Verfahren zur Initialisierung eines Speicherbereichs geschaffen, wobei der Speicherbereich einem Smart-Meter zugeordnet ist, wobei das Verfahren den Schritt umfasst des Aufbaus eines ersten Kommunikationskanals zwischen einem ersten Computersystem und einem Sicherheitsmodul, wobei das Sicherheitsmodul dem Speicherbereich zugeordnet ist. Das erste Computersystem ist dabei einem über ein Netzwerk verbundenen Satz von Computersystemen zugeordnet. Das Verfahren umfasst ferner den Schritt der Authentifizierung des ersten Computersystems gegenüber dem Sicherheitsmodul, wobei die Initialisierung der Ermöglichung einer Kommunikation des Sicherheitsmoduls mit weiteren Computersystemen des Satzes von Computersystemen dient, wobei vor der Initialisierung des Speicherbereichs ausschließlich für das erste Computersystem des Satzes von Computersystemen eine erfolgreiche Authentifizierung gegenüber dem Sicherheitsmodul möglich ist. Nach erfolgreicher Authentifizierung des ersten Computersystems gegenüber dem Sicherheitsmodul erfolgt ein Empfang von Daten von dem ersten Computersystem durch das Sicherheitsmodul durch eine gesicherte Übertragung und Speicherung der Daten in dem Speicherbereich zur Initialisierung des Speicherbereichs, wobei erst aufgrund der gespeicherten Daten eine Kommunikation eines zweiten Computersystems eines Energieversorgers und/oder Messstellenbetreibers und dem Sicherheitsmodul unter Umgehung des ersten Computersystems ermöglicht wird, wobei das zweite Computersystem ein Computersystem aus dem Satz von Computersystemen ist.

Ausführungsformen der Erfindung könnten den Vorteil haben, dass durch den Initialisierungsvorgang in sicherer, eindeutiger und nachvollziehbarer Weise eine Möglichkeit bereitgestellt werden kann, welche eine sichere Kommunikation zwischen dem Smart-Meter und einem autorisierten Marktteilnehmer wie einem Energieversorger oder einem Messstellenbetreiber ermöglicht. Vorzugsweise handelt es sich dabei bei dem ersten Computersystem um ein Computersystem einer vertrauenswürdigen Instanz, welche auch als "Trusted Service Manager" oder "TSM" bezeichnet wird.

Vorzugsweise ist hierfür das Sicherheitsmodul beispielsweise in seinem Auslieferungszustand so konfiguriert, dass ausschließlich diese vertrauenswürdige Instanz in der Lage ist, eine Kommunikation nach erfolgreicher Authentifizierung mit dem Sicherheitsmodul durchzuführen. Dadurch ist gewährleistet, dass insbesondere eine entgeltrelevante Konfiguration des Smart-Meterings nur einer solchen Stelle überlassen wird, welche sowohl von den autorisierten Markteilnehmern, das heißt zum Beispiel den Messstellenbetreibern und den eigentlichen Energieversorgern, als auch den Endverbrauchern als vertrauenswürdig eingestuft ist. Unter "entgeltrelevante Konfiguration" wird im Folgenden verstanden, dass durch diese Konfiguration bezüglich eines Smart-Meters festgelegt wird, wer zum Beispiel zur Abrechnung der durch das Smart-Meter erfassten Energiemengen berechtigt ist. Ferner kann dadurch auch festgelegt werden, welche Personen wie Endverbraucher und autorisierte Marktteilnehmer in welchem Umfang auf die Funktionen und bezüglich des Smart Meters verfügbaren Informationen überhaupt Zugriff haben dürfen. Da diese Festlegung von Seitens einer vertrauenswürdigen Stelle erfolgt, ist dadurch gewährleistet, dass ein Missbrauch dieser Funktionen und Informationen durch unbefugte Dritte ausgeschlossen ist. Die Informationen können dabei z.B. Standortinformationen des Smart Meters, durch das Smart Meter gemessene Werte und Standortinformationen des Speicherbereichs enthaltene Werte umfassen.

Durch die Speicherung der empfangenen Daten in dem Speicherbereich zur Initialisierung des Speicherbereichs können somit bezüglich einem oder mehrerer diesem Speicherbereich zugeordneter Smart-Meter z.B. festgelegt werden, an wen zum Beispiel erfasste Energiemengen gemeldet werden, wie die Energiemengen zeitlich gesehen zu erfassen sind und welche Informationen oder "Attribute" ein autorisierter Marktteilnehmer bezüglich des Smart-Meters erfassen und/oder abfragen darf. Ferner kann dadurch auch festgelegt werden, inwieweit ein zum Beispiel Endverbraueher Zugriff auf die Informationen hat, welche bezüglich des Smart-Meters entweder im Smart-Meter selber oder an einem dem Smart-Meter zugeordneten Gerät wie einem Gateway oder dem Sicherheitsmodul hinterlegt sind.

Ausführungsformen der Erfindung sind also insgesamt besonders vorteilhaft, da ein besonders hohes Maß an Vertrauenswürdigkeit sowohl hinsichtlich der bezüglich des Smart-Meters hinterlegten Daten "Konfigurationsdaten" als auch hinsichtlich des Datenschutzes der durch das Smart-Meter erfassten Messdatenelemente sowohl für Endverbraucher als auch für Messstellenbetreiber und Energieversorger gewährleistet ist.

Nach einer Ausführungsform der Erfindung erfolgt die gesicherte Übertragung durch eine Ende-zu-Ende-Verschlüsselung zwischen dem ersten Computersystem und dem Sicherheitsmodul. Dies ermöglicht es, die Verbindung zwischen dem Sicherheitsmodul und dem ersten Computersystem über beliebige Netzwerke aufzubauen, da aufgrund der Ende-zu-Ende-Verschlüsselung keine Änderungen der über die Verbindung übertragenen Daten durch Dritte vorgenommen werden können. Allgemein kann die Erfindung dadurch realisiert werden, dass die gesamte Kommunikation zwischen dem ersten Computersystem und dem Sicherheitsmodul über beliebige Arten von Netzwerken erfolgen kann. Dies umfasst eine Kommunikation über das Internet, eine Kommunikation durch drahtlose Netzwerkverbindungen wie beispielsweise Mobilfunk, als auch eine Kommunikation unter Verwendung einer Trägerfrequenzanlage. Letztere ist auch unter dem Namen: "Powerline Datenübertragung" bekannt und umfasst Vorrichtungen zur Datenübertragung über vorhandene Stromnetze.

Nach einer weiteren Ausführungsform der Erfindung erfolgt die Authentifizierung des ersten Computersystems gegenüber dem Sicherheitsmodul mit Hilfe eines ersten Zertifikats des ersten Computersystems. Das Sicherheitsmodul kann dann anhand dieses ersten Zertifikats überprüfen, ob das erste Computersystem die erforderliche Berechtigung für einen Schreibzugriff auf den Speicherbereich hat, bevor ein solcher Schreibzugriff durch das erste Computersystem durchgeführt werden kann.

Nach einer weiteren Ausführungsform der Erfindung ist vor der Initialisierung des Speicherbereichs ausschließlich bei Vorliegen des ersten Zertifikats die erfolgreiche Authentifizierung gegenüber dem Sicherheitsmodul möglich. So wird z.B. erst durch die Speicherung der Daten in dem Speicherbereich zur Initialisierung des Speicherbereichs das Sicherheitsmodul für eine Kommunikation mit dem zweiten Computersystem freigeschaltet, wobei durch die in dem Speicherbereich gespeicherten Daten selbst die Kommunikation mit dem zweiten Computersystem freigeschaltet wird. Es ist also nicht das Schreiben beliebiger Daten in den Speicherbereich, was die Freischaltung bewirkt, sondern es sind die Inhalte der Daten selbst, welche die Freischaltung bewirken. Z.B. könnte in den Daten eine konkrete Berechtigung für das zweite Computersystem enthalten sein, welche es dem Sicherheitsmodul ermöglicht, das zweite Computersystem als zugriffsberechtigt auf bestimmte Messdatenelemente oder Konfigurationsdaten zu erkennen. Damit ist sichergestellt, dass grundsätzlich nur die vertrauenswürdige Stelle in Form des ersten Computersystems zur Inbetriebnahme des Sicherheitsmoduls und damit des zugeordneten Smart Meters in der Lage ist. Damit werden Manipulationen oder gar Ausspähversuche unterbunden - ohne initiale Verwendung des ersten Computersystems und damit einer Einrichtung, welcher alle Teilnehmer vertrauen, ist eine Kommunikation mit dem Sicherheitsmodul nicht möglich.

Erfindungsgemäß ist ausschließlich für das erste Computersystem des Satzes von Computersystemen ein Schreibzugriff auf den Speicherbereich möglich. Damit wäre sichergestellt, dass niemals eine nicht-vertrauenswürdige Instanz Schreibzugriff auf den Speicherbereich erhält. Möglich ist aber auch, dass diese Beschränkung lediglich für den Zeitraum vor der Initialisierung des Speicherbereichs gilt und dass nach Initialisierung der Schreibzugriff für andere Computersysteme als das erste Computersystem auf z.B. einfache, nicht die Grundfunktionalität der Smart Meter und/oder des Gateways betreffende Schreibfunktionen begrenzt ist. Möglich wäre hier z.B. das Setzen von Flags und das Schreiben von Protokolleinträgen in den Speicherbereich. In diesem Fall wird also nach der Initialisierung der Schreibzugriff für andere Computersysteme als das erste Computersystem auf einen nicht-konfigurierenden Schreibzugriff beschränkt. Zusätzlich kommt hier natürlich noch die allgemeine Zugriffskontrolle zum Einsatz, wie sie bezüglich des zweiten Computersystems oben beschrieben ist und welche in grundsätzlicher Weise regelt, ob überhaupt das zweite Computersystem auf den Speicherbereich zugreifen darf.

Nach einer Ausführungsform der Erfindung umfasst die Authentifizierung ein Challenge-Response-Verfahren. Z.B. kann ein kryptografisches Protokoll, beispielsweise basierend auf einem symmetrischen Schlüssel oder einem asymmetrischen Schlüsselpaar zum Einsatz kommen, um eine Authentifizierung des ersten Computersystems gegenüber dem Sicherheitsmodul vorzunehmen.

Erfindungsgemäß sind entweder der Speicherbereich und das Sicherheitsmodul im dem Smart-Meter selbst enthalten oder aber der Speicherbereich und das Sicherheitsmodul sind in einem Smart-Meter-Gateway enthalten, wobei das Smart-Meter an dem Smart-Meter-Gateway ankoppelbar ist. Möglich ist beispielsweise, dass das Smart-Meter und der Smart-Meter-Gateway über eine drahtlose und/oder drahtgebundene Kommunikationsverbindung miteinander gekoppelt sind.

In allen Fällen dient der Speicherbereich unter anderem dazu, solche Daten wie Zertifikate und kryptografische Schlüssel dauerhaft zu speichern, welche einen zuverlässigen und sicheren Datenaustausch zwischen den die Smart-Meter betreibenden Endkunden und den diesen Smart-Metern zugeordneten Energieversorgern oder Messstellenbetreibern geschützt gewährleisten.

Insbesondere im Falle dessen der Speicherbereich in dem Smart-Meter-Gateway enthalten ist, ergibt sich der Vorteil, dass eine einzelne zentrale Einheit vorgesehen werden kann, welche für beliebige Kommunikationen mit außerhalb des Netzwerks Smart-Meter-Smart-Meter-Gateway befindlichen Teilnehmern ein einzelnes zentrales Kommunikations-Interface bereitstellt.

Erfindungsgemäß sind dem Smart Meter Konfigurationsdaten zum Betrieb des Smart Meters und/oder Gateways zugeordnet. Diese Konfigurationsdaten können in dem Speicherbereich gespeichert sein. Unter Konfigurationsdaten werden dabei jegliche Arten von Daten verstanden, welche den Betrieb des Smart Meters und/oder Gateways konfigurieren. Dies umfasst auch die Art und Weise der Datenerfassung wie z.B. die Taktung der Messdatenerfassung, Messdatenauswertung, Messdatenaggregation, Messdatenumwandlung, sowie standortspezifische Daten für Smart Meter und Gateway.

Erfindungsgemäß sind durch das Smart-Meter Energieverbrauchspezifische Messdatenelemente erfassbar. Unter "Messdatenelemente" werden dabei jegliche Arten von Daten verstanden, welche aus einer Energieverbrauchsmessung mit einem Smart Meter resultieren. Dies umfasst z.B. einen Zeitpunkt der Erfassung von Messdaten der Energieverbrauchsmessung, einzelne Messdatenpunkte zum jeweiligen Zeitpunkt und Informationen über das Zustandekommen der Messdaten wie zum Beispiel Stromstärke, Spannung, Wasserdruck, Wassertemperatur oder Gasdruck.

Nach einer Ausführungsform der Erfindung beinhalten die von dem ersten Computersystem empfangenen Daten eine Angabe derjenigen Messdatenelemente und/oder Konfigurationsdaten, welche durch das Smart Meter oder den Gateway unter Verwendung des Sicherheitsmoduls an das zweite Computersystem vorzugsweise selbständig und damit automatisch übermittelt werden.

Durch die Bereitstellung eines solchen Berechtigungskonzepts in Form der "Angaben" kann spezifisch für jeden Energieversorger und/oder Messstellenbetreiber im Voraus festgelegt werden, welche Messdatenelemente und/oder Konfigurationsdaten überhaupt durch diesen Energieversorger und/oder Messstellenbetreiber ausgelesen oder erfasst werden dürfen. Dadurch ist ein Datenschutz in hohem Maß gewährleistet. Eine Akzeptanz eines solchen Datenschutzkonzepts ist insbesondere dadurch gegeben, dass die Leseberechtigung durch eine vertrauenswürdige Stelle, nämlich das erste Computersystem autorisiert wird.

Erfindungsgemäß beinhalten die von dem ersten Computersystem empfangenen Daten auch eine Angabe über die zeitliche Frequenz einer Erfassung der Messdatenelemente durch das Smart Meter und/oder eine Angabe über die zeitliche Frequenz der Übermittlung der Messdatenelemente und/oder Konfigurationsdaten an das zweite Computersystem. So kann durch das erste Computersystem eine vollständige Grundkonfiguration des Smart Meters oder des Gateways durchgeführt werden - der Endkunde braucht sich also keine Gedanken mehr zu machen, ob das zweite Computersystem nicht irgendwelche ungewollten Konfigurationen bezüglich seines Smart Meters vornimmt.

Ziel ist vorzugweise die Ermöglichung des Aufbaus eines zweiten Kommunikationskanals zwischen einem zweiten Computersystem des Energieversorgers und/oder Messstellenbetreibers und dem Sicherheitsmodul. Dem folgt dann eine gegenseitige Authentifizierung des zweiten Computersystems und des Sicherheitsmoduls, wobei die Authentifizierung mit Hilfe des zweiten Zertifikats und mit Hilfe eines dritten Zertifikats des Sicherheitsmoduls erfolgt. Nach erfolgreicher gegenseitiger Authentifizierung erfolgt das Übermitteln zumindest eines Teils der in den Daten spezifizierten Messdatenelemente und/oder Konfigurationsdaten von dem Sicherheitsmodul an das zweite Computersystem durch eine gesicherte Übertragung. Alternativ oder zusätzlich ist es auch möglich, dass in dem zweiten Zertifikat ebenfalls Messdatenelemente und/oder Konfigurationsdaten spezifiziert sind, für welche der Energieversorger und/oder der Messstellenbetreiber für einen Lesezugriff berechtigt ist. In diesem Fall erfolgt zusätzlich oder alternativ das Übermitteln zumindest eines Teils der in dem zweiten Zertifikat spezifizierten Messdatenelemente und/oder Konfigurationsdaten von dem Sicherheitsmodul an das zweite Computersystem durch die gesicherte Übertragung.

Durch die genannten Verfahrensschritte wird sichergestellt, dass ausschließlich dann Messdatenelemente und/oder Konfigurationsdaten zwischen dem zweiten Computersystem des Energieversorgers und/oder Messstellenbetreibers und dem Sicherheitsmodul übertragen werden, wenn sowohl Energieversorger oder Messstellenbetreiber und Endverbraucher an einer solchen Datenübertragung überhaupt interessiert sind und wenn beide Seiten in eine solche Datenübertragung zuvor eingewilligt haben. Nur dann wird der besagte Speicherbereich mit den Berechtigungs-Angaben für das zweite Computersystem durch die vertrauenswürdige Instanz versehen sein. Da die Instanz des ersten Computersystems ja vertrauenswürdig ist, können Endverbraucher davon ausgehen, dass für ihre Smart Meter ohne Einwilligung keine ungewollte Freischaltung von zweiten Computersystemen durch entsprechende Hinterlegung der besagten Angaben in dem Speicherbereich erfolgt. Liegt eine solche gegenseitige Einwilligung nicht vor, so kann beispielsweise der Energieversorger oder der Messstellenbetreiber die Echtheit des dritten Zertifikats des Sicherheitsmoduls nicht bestätigen oder aber das Sicherheitsmodul ist im Gegenzug nicht in der Lage, das zweite Zertifikat des Energieversorgers oder Messstellenbetreibers als echt und vertrauenswürdig zu erkennen. Vorzugsweise könnten bei der Initialisierung des Speicherbereichs dem Sicherheitsmodul solche Informationen zur Verfügung gestellt werden, welche das Sicherheitsmodul in die Lage versetzen würden, die Echtheit des zweiten Zertifikats zu bestätigen. Selbst wenn sich jedoch Sicherheitsmodul und Energieversorger oder Messstellenbetreiber gegenseitig vertrauen würden, ist dennoch für den Endverbraucher gesichert, dass der Messstellenbetreiber oder Energieversorger auch lediglich die Daten auslesen kann, welche zuvor eindeutig als "Messdatenelemente" und/oder "Konfigurationsdaten" für diesen Zweck definiert wurden.

Eine Akzeptanz eines solchen Datenschutzkonzepts ist insbesondere dadurch gegeben, dass Messdatenelemente und/oder Konfigurationsdaten nach einer Ausführungsform der Erfindung zusätzlich oder alternativ in einem amtlichen Dokument, nämlich einem Zertifikat, enthalten sind. Da das Zertifikat fälschungssicher ist und dessen Echtheit ohne Weiteres durch den Endverbraucher überprüft werden kann wird auch dadurch ein besonders hohes Maß an Vertrauenswürdigkeit hinsichtlich der Mitteilung der spezifizierten Messdatenelemente und/oder Konfigurationsdaten ermöglicht. Vorzugsweise ist wiederum das besagte Zertifikat durch das erste Computersystem signiert. Bei dem Zertifikat kann es sich um das zweite Zertifikat handeln.

Es sei angemerkt, dass im Rahmen der gesamten Beschreibung vorzugsweise sämtliche Zertifikate durch den Betreiber des ersten Computersystems ausgestellt sein sollten. Auch dadurch wird die Sicherung der Vertrauenswürdigkeit sowohl von erstem und zweiten Computersystem, als auch des Sicherheitsmoduls gewährleistet.

Es ist auch möglich, dass der Aufbau des zweiten Kommunikationskanals durch das Sicherheitsmodul erfolgt, wobei die Übermittlung des Teils der in den Daten und/oder in dem zweiten Zertifikat spezifizierten Messdatenelemente und/oder Konfigurationsdaten durch ein Push-Verfahren erfolgt. Dadurch ist es also möglich, dass beispielsweise in bei der zum Beispiel Initialisierung des Speicherbereichs festgelegten zeitlichen Abständen das Sicherheitsmodul den zweiten Kommunikationskanal aufbaut, um dadurch in regelmäßigen Abständen zum Beispiel Energieverbrauchswerte an das zweite Computersystem zu übermitteln. Möglich ist dabei auch zum Beispiel, dass der zweite Kommunikationskanal nur unter bestimmten bei Initialisierung des Speicherbereichs festgelegten Bedingungen aufgebaut wird. Solche Bedingungen kann zum Beispiel eine Aggregation der erfassten Energiemengen oberhalb eines vorbestimmten Schwellwertes umfassen.

Erfindungsgemäß umfassen die von dem ersten Computersystem empfangenen Daten eine Energieerfassungsanwendung, wobei die Energieerfassungsanwendung mit den Daten von dem ersten Computersystem durch das Sicherheitsmodul empfangen wurde. Dadurch ist es möglich, bei der Initialisierung des Speicherbereichs durch das erste Computersystem eine Energieerfassungsanwendung bereitzustellen, welche in durch beispielsweise den Messstellenbetreiber und/oder den Energieversorger zuvor spezifizierter Weise eine Energieerfassung und Energieabrechnung ermöglicht. Außerdem könnte durch eine solche Energieerfassungsanwendung festgelegt werden, wie eine Energieerfassung zu erfolgen hat. Diese kann beispielsweise eine sekundengenaue Abrechnung oder aber eine Abrechnung mit aggregiertem Energieverbrauch über einen vorbestimmten Zeitraum erfassen. Ferner kann die Energieerfassungsanwendung auch eine Schnittstelle, z.B. eine WebSchnittstelle, bereitstellen, über welcher ein Endverbraucher in vordefinierter Weise eine Überwachung seines Energieverbrauchs selbst vornehmen kann.

Erfindungsgemäß ist der Vorrichtung die Angabe in Form der Energieerfassungsanwendung zugeordnet. D.h., die Energieerfassungsanwendung ist in der Lage, mittels entsprechender Programminstruktionen zu überwachen, inwieweit und ob überhaupt das zweite Computersystem Zugriff auf die Messdatenelemente und/oder die Konfigurationsdaten erhalten darf. Ferner können diese Programminstruktionen der selbständigen Übermittlung der Messdatenelemente an das zweite Computersystem unter Nutzung des Sicherheitsmoduls als Kommunikationsinterface dienen. Ferner kann die Energieerfassungsanwendung ein Energieversorgerspezifisches Nutzerinterface für den Endverbraucher, welcher Verwender des Sicherheitsmoduls ist, bereitstellen. Der Endverbraucher kann sich also über dieses Interface, z.B. ein Webinterface, über eigene verbrauchsspezifische Details informieren.

Erfindungsgemäß ist die von dem ersten Computersystem in den empfangenen Daten enthaltene Angabe in der Energieerfassungsanwendung selbst enthalten, wobei die Energieerfassungsanwendung den Zugriff des zweiten Computersystems auf die Messdatenelemente und/oder Konfigurationsdaten anhand der Angabe überwacht. Alternativ oder zusätzlich können die Angaben in einer separaten Datei, z.B. einer Berechtigungstabelle, enthalten sein, auf welche die Energieerfassungsanwendung zur Zugriffsüberwachung zugreift.

Es sei an dieser Stelle angemerkt, dass Ausführungsformen der Erfindung besonders dann vorteilhaft sind, wenn der Speicherbereich und das Sicherheitsmodul in einem Smart-Meter-Gateway enthalten sind. In diesem Fall ist z.B. möglich, den Smart-Meter-Gateway mit verschiedenen Smart-Metern zu koppeln, sodass bei einem Initialisierungsvorgang spezifische Energieerfassungsanwendungen und/oder Konfigurationsdaten für jeden Smart-Meter und gegebenenfalls pro Smart-Meter für verschiedene Energieversorger oder Messstellenbetreiber bereitgestellt werden können. Dies umfasst auch die erneute Verwendung der Verfahrensschritte zur Initialisierung des Speicherbereichs bezüglich eines Updates des Inhalts des Speicherbereichs, beispielsweise aufgrund einer Aktualisierung einer Energieerfassungsanwendung. Ferner umfasst dies die Möglichkeit des späteren Hinzufügens von einer oder weiterer Energieerfassungsanwendungen zu dem Speicherbereich. Dadurch ist durch die Bereitstellung eines einzelnen Gateways eine nahezu unbegrenzte Erweiterungsfähigkeit mit einer Vielzahl verschiedener Smart-Meter und die Möglichkeit einer Zugriffskontrolle auf den Gateway für eine Vielzahl von verschiedenen Energieversorgern und/oder Messstellenbetreibern möglich. Dies ist insbesondere im Hinblick auf die Verwendung beispielsweise in Mehrfamilienhäusern relevant, in welchen verschiedene Teilnehmer zu verschiedenen Uhrzeiten und Wochentagen verschiedene Energieversorger oder Messstellenbetreiber zur Energieabrechnung und -versorgung bestimmt haben.

Die bezüglich der Energieerfassungsanwendung beschriebene Vorgehensweise kann alternativ oder zusätzlich analog auch bezüglich der Konfigurationsdaten und/oder der Berechtigungs-Angaben selbst vorgenommen werden. Dies umfasst also z.B. ein Update der Konfigurationsdaten durch das erste Computersystem und das Hinzufügen neuer Konfigurationsdaten durch das erste Computersystem, sowie eine Änderung des Berechtigungskonzepts durch das erste Computersystem. Gesichert werden sollte, dass zu einem beliebigen Zeitpunkt ausschließlich das erste Computersystem eine Veränderung, Aktualisierung oder Löschung der Berechtigungs- und Konfigurationsangaben vornehmen darf.

Es wäre ebenfalls möglich, dass die Energieerfassungsanwendung den Aufbau des zweiten Kommunikationskanals initiiert. Wie bereits oben erwähnt ist es damit möglich, insbesondere in zuvor festgelegten Zeitabständen, eine Meldung der erfassten Energiemengen an den Energieversorger oder Messstellenbetreiber zu senden. Dies erspart also dem Energieversorger oder Messstellenbetreiber die Notwendigkeit, eine zeitlich sinnvolle Abfrage des erfassten Energieverbrauchs vorzunehmen. Wird beispielsweise der Energieverbrauch nur dann an das zweite Computersystem gemeldet, wenn ein Mindest-Energieverbrauch überschritten wird, erspart sich somit das zweite Computersystem eine unter Umständen überflüssige Abfrage, weil der Gesamtenergieverbrauch noch nicht diesen Schwellwert überschritten hat. Nichtsdestotrotz ist es selbstverständlich möglich, in regelmäßigen Abständen, zum Beispiel bei Erstellung einer Endabrechnung, von Seitens des zweiten Computersystems eine Kommunikation mit dem Sicherheitsmodul aufzubauen und damit die Messdatenelemente von dem Sicherheitsmodul an das zweite Computersystem zu übertragen.

Nach einer weiteren Ausführungsform der Erfindung umfasst das Verfahren ferner die Schritte des Aufbaus eines dritten Kommunikationskanals zwischen dem zweiten Computersystem und dem ersten Computersystem, einer Authentifizierung des zweiten Computersystems gegenüber dem ersten Computersystem und nach erfolgreicher Authentifizierung des zweiten Computersystems gegenüber dem ersten Computersystem ein Empfang einer Anforderung zur Initialisierung des Speicherbereichs von dem zweiten Computersystem durch das erste Computersystem, wobei die Anforderung eine Kennung des Speicherbereichs umfasst, wobei die Kennung den Speicherbereich eindeutig identifiziert.

Dadurch ist es möglich, dass das zweite Computersystem des Energieversorgers oder Messstellenbetreibers unter Verwendung des ersten Computersystems die Durchführung der Initialisierung des Speicherbereichs veranlasst. Erst wenn jedoch das erste Computersystem das zweite Computersystem als vertrauenswürdig eingestuft hat, wird das zweite Computersystem den ersten Kommunikationskanal zu dem Sicherheitsmodul aufbauen und den Initialisierungsvorgang durchführen. Dadurch, dass durch das zweite Computersystem eine eindeutige Kennung des zu initialisierenden Speicherbereichs an das erste Computersystem übermittelt wird, ist das erste Computersystem auch eindeutig dazu in der Lage, genau das Sicherheitsmodul zu adressieren, welches auch tatsächlich dem gewünschten zu initialisierenden Speicherbereich zugeordnet ist. Damit ist insgesamt eine einfache und effiziente Möglichkeit geschaffen, mittels welcher kommuniziert werden kann, welche Smart-Meter von Endverbrauchern zur Datenerfassung bezüglich entsprechender Messstellenbetreiber und/oder Energieversorger verwendet und konfiguriert werden sollen.

Möglich ist auch, die Kennung des Speicherbereichs durch eine Kennung des Sicherheitsmoduls zu geben. Dadurch wird gewährleistet, dass Sicherheitsmodul und Speicherbereich untrennbar miteinander verknüpft sind. Einer eindeutigen Adressierung des Sicherheitsmoduls entspricht damit einer eindeutigen Adressierung des Speicherbereichs. Befindet sich der Speicherbereich in einem Smart-Meter-Gateway, so ist dadurch sichergestellt, dass nicht nachträglich in unbefugter Weise der Gateway durch einen anderen Gateway ersetzt werden kann. Beispielsweise könnte dadurch unterbunden werden, dass einem Messstellenbetreiber Werte von einem "gehackten" Gateway zur Verfügung gestellt werden, welcher nur sporadisch mit entsprechenden Smart-Metern verbunden ist und damit eigentlich überhaupt keine reale Energieverbrauchserfassung durchführt. Der besagte Speicherbereich kann ausschließlich über das Sicherheitsmodul durch das erste Computersystem beschrieben werden und eine Adressierung dieses Speicherbereichs ist aufgrund der Kennung eindeutig. Die Verwendung eines anderen Gateways mit anderem Speicherbereich wäre in diesem Fall also grundsätzlich unmöglich, da ein Aufspielen der zur Energieerfassung relevanten Daten seitens des ersten Computersystems nie stattfinden würde.

Es ist möglich, dass es sich bei der Kennung des Sicherheitsmoduls um einen öffentlichen Schlüssel des Sicherheitsmoduls oder um eine IPv6-Adresse des Sicherheitsmoduls handelt. Die Verwendung des öffentlichen Schlüssels des Sicherheitsmoduls als Kennung des Sicherheitsmoduls und damit als Kennung des Speicherbereichs hat den Vorteil, dass dadurch eine GUID (Globally Unique Identifier) bereitgestellt werden kann, welche mit nahezu absolut sicherer Wahrscheinlichkeit eindeutig ist. Eine einfache Verwaltung der Kennungen würde z.B. durch einfache Vergabe eines möglichst langen öffentlichen Schlüssels ermöglicht. Im Falle dessen es sich bei der Kennung des Sicherheitsmoduls um eine IPv6-Adresse handelt, wäre es in einfacher Weise möglich, über bestehende Netzwerke eine eindeutige Adressierung des Sicherheitsmoduls vorzunehmen.

Beispielhaft beinhaltet das dritte Zertifikat den öffentlichen Schlüssel des Sicherheitsmoduls. Dieser öffentliche Schlüssel ist dabei einem privaten Schlüssel zugeordnet, welcher in einem geschützten Speicherbereich im Sicherheitsmodul gespeichert ist. Das Zertifikat kann nach einem Public Key Infrastructure (PKI)-Standard erstellt worden sein, beispielsweise nach dem X.509-Standard.

An dieser Stelle sei angemerkt, dass die beschriebenen Zertifikate (erstes, zweites und drittes Zertifikat) nicht zwangsläufig in einem Speicher der hierfür vorgesehenen Vorrichtung (erstes Computersystem, zweites Computersystem, Sicherheitsmodul) gespeichert sein müssen. Alternativ oder zusätzlich ist es auch möglich, dass die Zertifikate auf einem öffentlichen Verzeichnisserver abgespeichert sind.

Möglicherweise wird das Sicherheitsmodul untrennbar mit dem Smart-Meter oder dem Smart-Meter-Gateway verbunden. Unter "untrennbar" wird dabei eine dauerhafte Verknüpfung von Sicherheitsmodul und Smart-Meter oder Smart-Meter-Gateway verstanden, welche eine Funktionsfähigkeit des Sicherheitsmoduls gewährleistet. Sobald versucht wird, das Sicherheitsmodul vom Smart-Meter oder dem Smart-Meter-Gateway zu entfernen, geht das Sicherheitsmodul in einen unbrauchbaren, d.h. funktionsunfähigen Zustand über. Dies kann entweder durch eine elektronische Selbstzerstörung, Selbstdeaktivierung oder eine physikalische Zerstörung oder Deaktivierung des Sicherheitsmoduls beim Ausbau gewährleistet sein. Im einfachsten Fall könnte das Sicherheitsmodul in einem Gehäuse des Smart-Meters oder Smart-Meter-Gateways eingegossen sein, sodass aufgrund des "Aufbrechens" dieser Gussverbindung die Zerstörung des Sicherheitsmoduls resultiert.

Vorzugsweise wird aufgrund des Verbindens des Sicherheitsmoduls mit dem Smart-Meter oder dem Smart-Meter-Gateway ein Verknüpfungsprozess auf dem Smart-Meter oder dem Smart-Meter-Gateway gestartet, wobei durch den Verknüpfungsprozess eine untrennbare logische Verknüpfung zwischen dem Sicherheitsmodul und dem Smart-Meter oder dem Smart-Meter-Gateway hergestellt wird. Zum Beispiel umfasst diese untrennbare logische Verknüpfung einen irreversiblen Kopiervorgang des dritten Zertifikats oder der Kennung des Sicherheitsmoduls auf dem Speicherbereich.

Beispielhaft wird das Sicherheitsmodul in Form einer Chipkarte bereitgestellt. Beispielsweise könnte das Sicherheitsmodul in Form einer Chipkarte durch den Betreiber des ersten Computersystems vorkonfiguriert werden, indem auf der Chipkarte diejenige Informationen gespeichert werden, welche es ermöglichen, eine Authentifizierung des ersten Computersystems gegenüber dem Sicherheitsmodul zur späteren Durchführung des Initialisierungsvorgangs zu ermöglichen.

Beispielhaft handelt es sich bei dem ersten Computersystem um ein behördlich zertifiziertes Trustcenter.

In einem weiteren Aspekt betrifft die Erfindung ein Sicherheitsmodul, wobei das Sicherheitsmodul einem Speicherbereich zuordenbar ist, wobei der Speicherbereich einem Smart Meter zuordenbar ist, wobei das Sicherheitsmodul zur Initialisierung des Speicherbereichs ausgebildet ist, wobei das Sicherheitsmodul Mittel zum Aufbau eines ersten Kommunikationskanals mit einem ersten Computersystem aufweist, wobei das erste Computersystem einem über ein Netzwerk verbundenen Satz von Computersystemen zugeordnet ist. Ferner weist das Sicherheitsmodul Mittel zur Authentifizierung des ersten Computersystems gegenüber dem Sicherheitsmodul auf, wobei die Initialisierung der Ermöglichung einer Kommunikation des Sicherheitsmoduls mit weiteren Computersystemendes Satzes von Computersystemen dient, wobei das Sicherheitsmodul so ausgebildet ist, dass vor der Initialisierung des Speicherbereichs ausschließlich für das erste Computersystem des Satzes von Computersystemen eine erfolgreiche Authentifizierung gegenüber dem Sicherheitsmodul möglich ist. Schließlich weist das Sicherheitsmodul noch Mittel zum Empfang von Daten von dem ersten Computersystem durch das Sicherheitsmodul durch eine gesicherte Übertragung und Speicherung der Daten in dem Speicherbereich zur Initialisierung des Speicherbereichs nach erfolgreicher Authentifizierung des ersten Computersystems gegenüber dem Sicherheitsmodul auf, wobei das Sicherheitsmodul so ausgebildet ist, dass erst aufgrund der gespeicherten Daten eine Kommunikation eines zweiten Computersystems eines Energieversorgers und/oder Messstellenbetreibers und dem Sicherheitsmodul unter Umgehung des ersten Computersystems ermöglicht wird, wobei das zweite Computersystem ein Computersystem aus dem Satz von Computersystemen ist.

In einem weiteren Aspekt betrifft die Erfindung ein erstes Computersystem zur Initialisierung eines Speicherbereichs, wobei der Speicherbereich einem Smart Meter zugeordnet ist, wobei das erste Computersystem umfasst:
- Mittel zum Aufbau eines ersten Kommunikationskanals zwischen dem ersten Computersystem und einem Sicherheitsmodul, wobei das Sicherheitsmodul dem Speicherbereich zugeordnet ist, wobei das erste Computersystem einem über ein Netzwerk verbundenen Satz von Computersystemen zugeordnet ist,
- Mittel zur Authentifizierung des ersten Computersystems gegenüber dem Sicherheitsmodul,
- Mittel zum Senden von Daten von dem ersten Computersystem an das Sicherheitsmodul durch eine gesicherte Übertragung zur Speicherung der Daten durch das Sicherheitsmodul in dem Speicherbereich zur Initialisierung des Speicherbereichs nach erfolgreicher Authentifizierung des ersten Computersystems gegenüber dem Sicherheitsmodul, wobei durch die gesendeten Daten ein zweites Computersystem eines Energieversorgers und/oder Messstellenbetreibers spezifiziert wird, wobei die Spezifikation der Freischaltung einer Kommunikation zwischen dem Sicherheitsmodul und dem zweiten Computersystem unter Umgehung des ersten Computersystems dient, wobei das zweite Computersystem ein Computersystem aus dem Satz von Computersystemen ist.

In einem weiteren Aspekt betrifft die Erfindung ein Computerprogrammprodukt mit von einem Prozessor ausführbaren Instruktionen zur Durchführung der oben beschriebenen Verfahrensschritte.

Im Folgenden werden bevorzugte Ausführungsformen der Erfindung anhand der Zeichnungen näher erläutert. Es zeigen:
- Figur 1: ein Blockdiagramm eines Systems zur Implementierung des obig beschriebenen Verfahrens,
- Figur 2: ein Flussdiagramm einer Ausführungsform eines Verfahrens zur Initialisierung eines Speicherbereichs,
- Figur 3: ein Flussdiagramm eines Verfahrens zur Bereitstellung eines Sicherheitsmoduls.

Im Folgenden werden einander ähnliche Elemente mit gleichen Bezugszeichen geken nzeichnet.

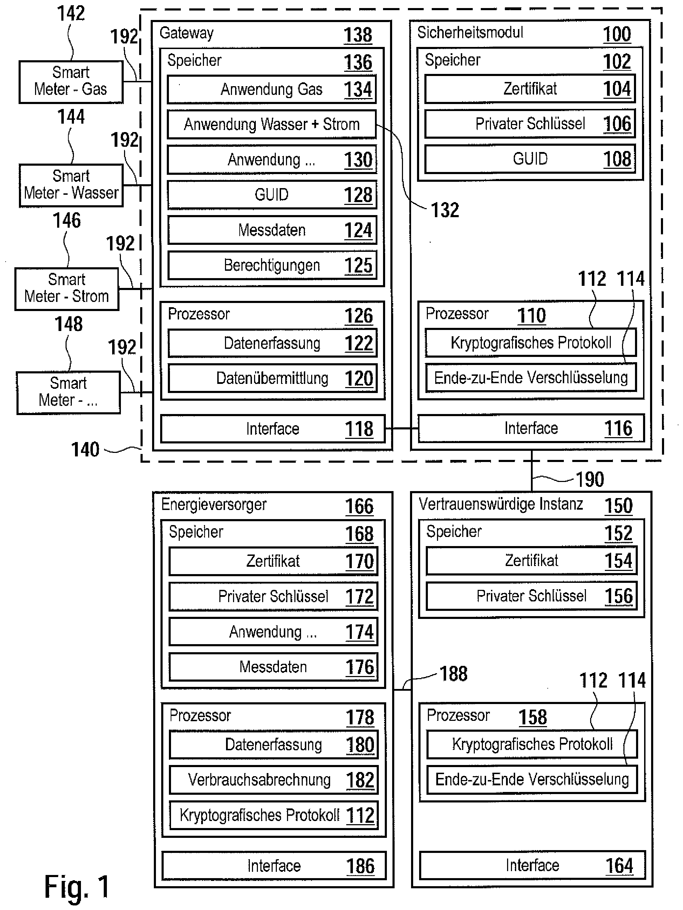

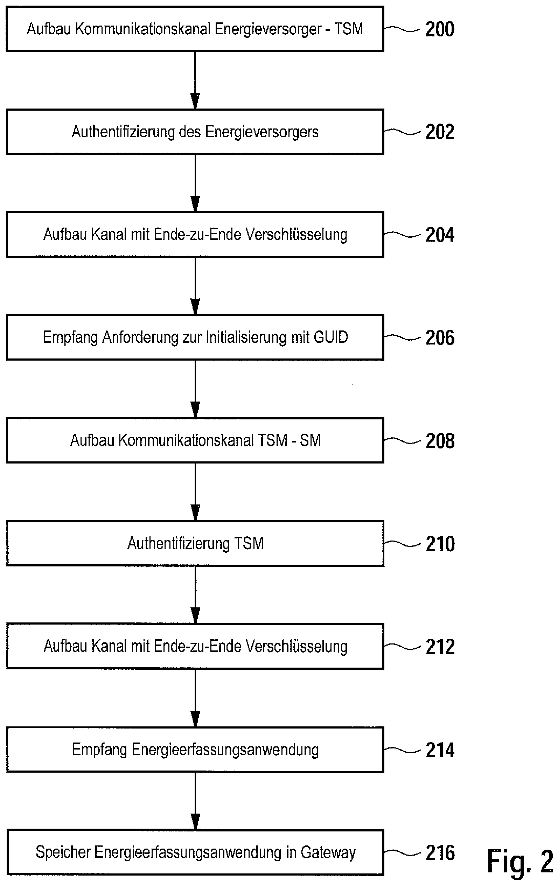

Die Figur 1 zeigt ein Blockdiagramm eines Gesamtsystems zur Initialisierung eines Speicherbereichs. Zusammen mit den in Figur 2 gezeigten Verfahrensschritten zur Initialisierung eines Speicherbereichs soll im Folgenden ohne der Beschränkung der Allgemeinheit gezeigt werden, wie ein Speicherbereich 136 eines Gateways 138, welcher einer Vielzahl von Smart-Metern 142, 144, 146, 148 zugeordnet ist, initialisiert werden kann.

Die Smart-Meter 142 - 148 dienen dabei der Erfassung verschiedener Energieverbrauchswerte bezüglich zum Beispiel Gas (Smart-Meter 142), Wasser (Smart-Meter 144), Strom (Smart-Meter 146) und weiteren nicht näher spezifizierten Energieformen (Smart-Meter 148). Die Smart-Meter sind dabei über entsprechende Kommunikationsverbindungen 192 mit dem Interface 118 des Gateways 138 verbunden.

Es sei davon ausgegangen, dass ein Sicherheitsmodul 100 fest und untrennbar mit dem Gateway 138 verbunden ist, sodass insgesamt durch die Kombination des Gateways 138 und des Sicherheitsmoduls 100 eine untrennbare Einheit 140 gegeben ist. Der Gateway 138 und das Sicherheitsmodul 100 kommunizieren über jeweilige Interfaces 118 bzw. 116 miteinander. Über das Interface 116 findet ferner eine Kommunikation mit autorisierten Markteilnehmern und dritten Personen bzw. Instanzen statt, welche nicht innerhalb des durch die Einheit 140 und den Smart-Metern 142 - 148 gebildeten Netzwerks befindlich sind. Die Kommunikation zwischen Interface 116 des Sicherheitsmoduls 100 und weiteren Kommunikationsteilnehmern erfolgt dabei über eine Kommunikationsverbindung 190. Hierbei kann es sich beispielsweise um eine Powerline-Verbindung oder eine Kommunikationsverbindung über ein mobiles Telekommunikationsnetz oder das Internet handeln.

Das Sicherheitsmodul 100 hat einen elektronischen Speicher 102 mit geschütztem Speicherbereich 106 und 108. Der geschützte Speicherbereich 106 dient zur Speicherung eines privaten Schlüssels des Sicherheitsmoduls 100 und der Speicherbereich 108 dient zur Speicherung einer Kennung des Sicherheitsmoduls "GUID" (Globally Unique Identifier). Bei dem GUID kann es sich beispielsweise um eine IPv6-Adresse des Sicherheitsmoduls 100 handeln.

Der elektronische Speicher 102 kann ferner einen Speicherbereich 104 zur Speicherung eines Zertifikats aufweisen. Das Zertifikat beinhaltet einen öffentlichen Schlüssel, der dem in dem geschützten Speicherbereich 106 gespeicherten privaten Schlüssel zugeordnet ist. Das Zertifikat kann nach einem Public Key Infrastructure (PKI)-Standard erstellt worden sein, beispielsweise nach dem X.509-Standard.

Das Zertifikat muss nicht zwangsläufig mit dem elektronischen Speicher 102 des Sicherheitsmoduls 100 gespeichert sein. Alternativ oder zusätzlich kann das Zertifikat auch in einem öffentlichen Verzeichnisserver gespeichert sein.

Das Sicherheitsmodul 100 hat einen Prozessor 110 zur Ausführung von Programminstruktionen 112 und 114. Durch Ausführung der Programminstruktionen 112 "kryptografisches Protokoll" wird beispielsweise eine Authentifizierung einer vertrauenswürdigen Instanz 150 oder eines Energieversorgers 166 gegenüber dem Sicherheitsmodul 100 ermöglicht. Bei dem kryptografischen Protokoll kann es sich beispielsweise um ein Challenge-Response-Protokoll basierend auf einem symmetrischen Schlüssel oder einem asymmetrischen Schlüsselpaar handeln.

Möglich ist natürlich auch eine gegenseitige Authentifizierung von Sicherheitsmodul und vertrauenswürdiger Instanz bzw. Energieversorger.

Die Programminstruktionen 114 dienen zur Ende-zu-Ende-Verschlüsselung von zwischen dem Sicherheitsmodul 100 und der vertrauenswürdigen Instanz 150 bzw. dem Energieversorger 166 zu übertragenden Daten. Für die Ende-zu-Ende-Verschlüsselung kann ein symmetrischer Schlüssel verwendet werden, der beispielsweise anlässlich der Ausführung des kryptografischen Protokolls zwischen dem Sicherheitsmodul 100 und den weiteren Teilnehmern 150 bzw. 166 vereinbart wird.

Ähnlich wie das Sicherheitsmodul 100 weist auch die vertrauenswürdige Instanz 150 einen elektronischen Speicher 152 und einen geschützten Speicherbereich 156 zur Speicherung eines privaten Schlüssels der vertrauenswürdigen Instanz auf. In dem Speicher 152 kann auch noch ein Zertifikat 154 der vertrauenswürdigen Instanz enthalten sein. Dieses Zertifikat kann jedoch ebenfalls auf einem zentralen Zertifikatserver gespeichert sein.

Ein Prozessor 158 der vertrauenswürdigen Instanz 150 weist wiederum die obig bezüglich des Sicherheitsmoduls 100 beschriebenen Programminstruktionen 112 und 114 zur Implementierung eines kryptografischen Protokolls und zur Durchführung einer Ende-zu-Ende-Verschlüsselung auf. Das kryptografische Protokoll und die Ende-zu-Ende-Verschlüsselung können zur Kommunikation über das Interface 164 mit dem Energieversorger 166 oder mit dem Sicherheitsmodul 100 verwendet werden. Das Zertifikat 154 beinhaltet wiederum einen öffentlichen Schlüssel, der dem in dem geschützten Speicherbereich 156 gespeicherten privaten Schlüssel zugeordnet ist.

Bei dem "Energieversorger" 166 handelt es sich um ein Computersystem des Energieversorgers, welches wiederum einen elektronischen Speicher 168 und einen Prozessor 178 aufweist. Ferner ist diesem Computersystem ein Interface 186 zugeordnet, über welches eine Kommunikation mit der vertrauenswürdigen Instanz 150 bzw. dem Sicherheitsmodul ermöglicht wird.

Der elektronische Speicher 168 des Energieversorgers 166 weist einen geschützten Speicherbereich 172 mit einem privaten Schlüssel auf, wobei der private Schlüssel einem öffentlichen Schlüssel zugeordnet ist, welcher in einem Zertifikat 170 ebenfalls im elektronischen Speicher 168 enthalten ist. Ferner ist im Speicher 168 ein Speicherbereich für eine oder mehrere Anwendungen vorgesehen, wobei diese Anwendungen beispielsweise eine entgeltrelevante Konfiguration des Gateways 138 ermöglichen. Ebenfalls im elektronischen Speicher 168 können Messdaten 176 gespeichert sein, welche zuvor von dem Gateway 138 empfangen wurden.

Der Prozessor 178 weist Programminstruktionen 180 zur Erfassung der durch den Gateway 138 gelieferten Verbrauchsdaten und des Weiteren optional zur Ausführung von Verfahrensschritten zur Verbrauchsabrechnung in Abhängigkeit von den ermittelten Messdaten (Programminstruktionen 182) auf. Die Programminstruktionen zur Ausführung von Schritten eines kryptografischen Protokolls 112 sowie nicht gezeigte Programminstruktionen zur Durchführung einer Ende-zu-Ende-Verschlüsselung können ebenfalls vorgesehen sein, wobei durch diese Programminstruktionen eine sichere Kommunikation mit der vertrauenswürdigen Instanz 150 bzw. dem Sicherheitsmodul 100 ermöglicht wird.

Soll nun ein Neukunde dem Energieversorger 166 zugeordnet werden, könnte beispielsweise nach einer ersten Installation der Smart-Meter 142 - 148 und der Bereitstellung von Gateway 138 mit Sicherheitsmodul 102 ein Initialisierungsvorgang des Sicherheitsmoduls stattfinden. Dieser Initialisierungsvorgang könnte dadurch angestoßen werden, dass der Neukunde (ein Endverbraucher) oder eine bestimmte technische Instanz, welche die Smart-Meter installiert hatte, dem Energieversorger 166 eine entsprechende Mitteilung hierüber erstatten. Diese Mitteilung sollte vorzugsweise die GUID 108 des Sicherheitsmoduls 100 umfassen, da dadurch eine eindeutige Identifizierung des Sicherheitsmoduls 100 gegenüber dem Energieversorger 166 möglich ist.

Nachdem der Energieversorger 166 diese Mitteilung über sein Interface 186, beispielsweise über eine Webschnittstelle einer entsprechende Webseite erhalten hat, baut der Energieversorger 166 einen Kommunikationskanal zur vertrauenswürdigen Instanz 150 auf. Dieser Schritt ist in Figur 2 mit Bezugszeichen 200 bezeichnet. Die vertrauenswürdige Instanz kann hierbei beispielsweise ein sogenannter "Trusted Service Manager TSM" sein, also eine behördlich zertifizierte Instanz, welche in elektronischen Kommunikationsprozessen die jeweilige Identität des Kommunikationspartners bescheinigt.

Nach dem Aufbau des Kommunikationskanals in Schritt 200 erfolgt eine Authentifizierung des Energieversorgers 166 im Schritt 202. Hierzu wird das Zertifikat 170 des Energieversorgers durch die vertrauenswürdige Instanz 150 überprüft. Beispielsweise kann die vertrauenswürdige Instanz 150 bei positiver Zertifikatsüberprüfung ein Challenge-Response-Verfahren durchführen, bei welchem eine Zufallszahl erzeugt wird, welche mit einem im Zertifikat 170 beinhalteten öffentlichen Schlüssel des Energieversorgers 166 verschlüsselt wird und an den Energieversorger 166 übermittelt wird. Der Energieversorger 166 kann daraufhin mit seinem privaten Schlüssel 172 die Zufallszahl entschlüsseln und im Klartext zurücksenden. Stimmt die nun von der vertrauenswürdigen Instanz 150 empfangene Zufallszahl mit der zuvor beschriebenen Zufallszahl überein, ist die Authentizität des Energieversorgers 166 tatsächlich gesichert.

Nach Durchführung des Schritts 202 und dem optionalen Challenge-Response-Verfahren kann daraufhin in Schritt 204 ein Kanal mit Ende-zu-Ende-Verschlüsselung über die Kommunikationsverbindung 188 zwischen Energieversorgung 166 und der vertrauenswürdigen Instanz 150 aufgebaut werden. Hierbei können die Programminstruktionen 114 des Prozessors 158 der vertrauenswürdigen Instanz zum Einsatz kommen.

Nach Aufbau des Kanals in Schritt 204 empfängt die vertrauenswürdige Instanz 150 in Schritt 206 eine Anforderung zum Aufspielen einer Energieerfassungsanwendung 174 des Energieversorgers 166 und dem Speicher 136 des Gateways 138. Um den Speicher 136 bzw. den Gateway 138 eindeutig zu spezifizieren, wird mit der Anforderung zur Initialisierung des Speichers 136 auch die GUID 128 des Gateways 138, welche im Speicher 136 enthalten ist, an die vertrauenswürdige Instanz übermittelt. Vorzugsweise ist die GUID 128 des Speichers 136 identisch mit der GUID 108 des Speichers 102 des Sicherheitsmoduls 100.

Mit Empfang der GUID in Schritt 206 ist die vertrauenswürdige Instanz 150 in der Lage, eindeutig den gewünschten Gateway 138 zur Aufspielung der Anwendung 174 zu adressieren. Hierzu baut in einem nächsten Schritt 208 die vertrauenswürdige Instanz 150 über die Kommunikationsverbindung 190 einen Kommunikationskanal zum Sicherheitsmodul 100 auf. Die vertrauenswürdige Instanz 150 authentifiziert sich gegenüber dem Sicherheitsmodul 100, wobei die Authentifizierung nebst einer Überprüfung des Zertifikats 154 durch das Sicherheitsmodul beispielsweise wiederum ein Challenge-Response-Verfahren seitens des Sicherheitsmodul 100 umfasst. Hierzu könnte das Sicherheitsmodul 100 wiederum eine Zufallszahl erzeugen, mit dem öffentlichen Schlüssel der vertrauenswürdigen Instanz 150 verschlüsseln und an die vertrauenswürdige Instanz 150 senden. Die vertrauenswürdige Instanz 150 würde die verschlüsselte Zufallszahl mit ihrem privaten Schlüssel 156 entschlüsseln und die entschlüsselte Zufallszahl im Klartext zurück an das Sicherheitsmodul 100 senden. Stellt das Sicherheitsmodul fest, dass die so empfangene entschlüsselte Zufallszahl mit der ursprünglich seinerseits verschlüsselten Zufallszahl übereinstimmt, ist eine Authentifizierung der vertrauenswürdigen Instanz gegeben.

Das Verfahren setzt sich dann in Schritt 212 fort, nämlich den Aufbau eines Kommunikationskanals mit Ende-zu-Ende-Verschlüsselung zwischen der vertrauenswürdigen Instanz 150 und dem Sicherheitsmodul 100. Dies kann wiederum durch Verwendung der Programminstruktionen 114 des Prozessors 110 des Sicherheitsmoduls 100 erfolgen.

Im Schritt 214 empfängt das Sicherheitsmodul 100 die Energieerfassungsanwendung 174 von der vertrauenswürdigen Instanz.

An dieser Stelle sei angemerkt, dass es vorteilhaft sein kann, wenn beispielsweise die vertrauenswürdige Instanz die am häufigsten verschickten Energieerfassungsanwendungen in einem lokalen Speicher der vertrauenswürdigen Instanz vorrätig hält, sodass es nicht notwendig ist, bei Erschließung neuer Kunden ständig die Anwendungen 174 von dem Energieversorger 166 an die vertrauenswürdige Instanz 150 zu übertragen.

Nach Empfang der Energieerfassungsanwendung in Schritt 214 speichert das Sicherheitsmodul 100 die Anwendung in dem Speicher 136 des Gateways 138. Handelt es sich bei der Anwendung 174 beispielsweise um eine Anwendung, um Energieverbrauch bezüglich Wasser und Strom zu erfassen, so wird die Anwendung als die Anwendung 132 im Speicher 136 abgelegt. Diese Anwendung ist in der Lage, Energieverbrauchsdaten vom Smart-Meter 144 zu verarbeiten. Analog hierzu kann der Speicher 136 entsprechende Anwendungen für die Energieerfassung von Gas (134) sowie weitere Anwendungen 130 für die Erfassung weiterer Energieformen umfassen. Das Speichern der Energieerfassungsanwendung durch das Sicherheitsmodul 100 im Gateway 138 ist in Figur 2 durch den Schritt 216 gekennzeichnet.

Zusätzlich zu dem Empfang der Energieerfassungsanwendung in Schritt 214 durch das Sicherheitsmodul 100 ist es auch möglich, dass von der vertrauenswürdigen Instanz 150 separate Angaben in Form von Energieversorger-spezifische Berechtigungen oder genaue Spezifizierungen von Messdatenelementen empfangen werden, welche ebenfalls in einem weiteren Bereich 125 des Speichers 136 abgelegt werden. Diese Berechtigungen oder Spezifizierungen von Messdatenelementen ermöglichen es, im Voraus festzulegen, welche Informationen der Energieversorger 166 von dem Gateway 138 überhaupt erhalten darf. Hierzu ist es beispielsweise möglich, dass vorab von der vertrauenswürdigen Instanz 150 für jeden Energieversorger spezifische Berechtigungen definiert werden, welche global für alle Energieversorger 166 gelten und welche grundsätzlich mit der Übertragung von Energieerfassungsanwendungen dem Sicherheitsmodul und damit dem Gateway 138 übermittelt werden.

Ebenfalls möglich ist es, dass Konfigurationsdaten von der vertrauenswürdigen Instanz 150 erhalten werden. Diese Konfigurationsdaten können dabei die technische Konfiguration der Smart Meter und/oder des Gateways betreffen.

Anstatt oder zusätzlich zu diesen Berechtigungen oder Spezifizierungen in Form einer separaten Angabe ist es auch möglich, diese Berechtigungen oder Spezifizierungen in der Energieerfassungsanwendung selbst zu implementieren. Die Anwendung kontrolliert also selbständig anhand ihrer Programminstruktionen, welche Daten an den Energieversorger 166 kommuniziert werden.

Mittels der Programminstruktionen zur Datenerfassung 122 des Prozessors 126 ist nun der Gateway 138 in der Lage, Messdaten bezüglich eines Energieverbrauchs beispielsweise von dem Smart-Meter 144 und dem Smart-Meter 146 zu erfassen. Die entsprechenden Messdaten werden in dem Speicherbereich 124 des Speichers 136 abgelegt. Grundsätzlich bestehen die Messdaten 124 aus verschiedenen Messdatenelementen, welche beispielsweise umfassen können: Zeitpunkt der Erfassung der Messdaten, einzelne Messdatenpunkte zum jeweiligen Zeitpunkt, Informationen über das Zustandekommen der Messdaten (zum Beispiel Stromstärke, Spannung, Wasserdruck, Wassertemperatur, Gasdruck). Die Messdaten 124 können über die Anwendungen 130, 132 und 134 einer weiteren Auswertung unterzogen werden, woraus sich ausgewertete Messdaten ergeben, welche ebenfalls als "Messdatenelemente" im Speicherbereich 124 abgelegt werden können. Beispielsweise kann es sich bei den ausgewerteten Messdaten um akkumulierte Energieverbrauchswerte handeln.

Die obig beschriebenen Berechtigungen 125 bzw. die Spezifizierungen der Messdatenelemente ermöglichen es, von vornherein festzulegen, welche dieser Messdatenelemente 124 der Energieversorger 126 überhaupt abrufen darf, bzw. welche dieser Messdatenelemente 124 an den Energieversorger 126 überhaupt kommuniziert werden sollen. Ferner ermöglicht dies, von vornherein festzulegen, wie detailliert ein solches Abrufen erlaubt ist. Ein zu detailliertes und zeitgenaues Abrufen der Messdaten 124 könnte z.B. unerwünscht sein, da sich durch kurze Zeitintervalle von Messungen Erkenntnisse der Nutzung von elektronischen Geräten gewinnen und dadurch Benutzerprofile erstellt werden können, woran ein Endkunde jedoch gegebenenfalls kein Interesse haben könnte.

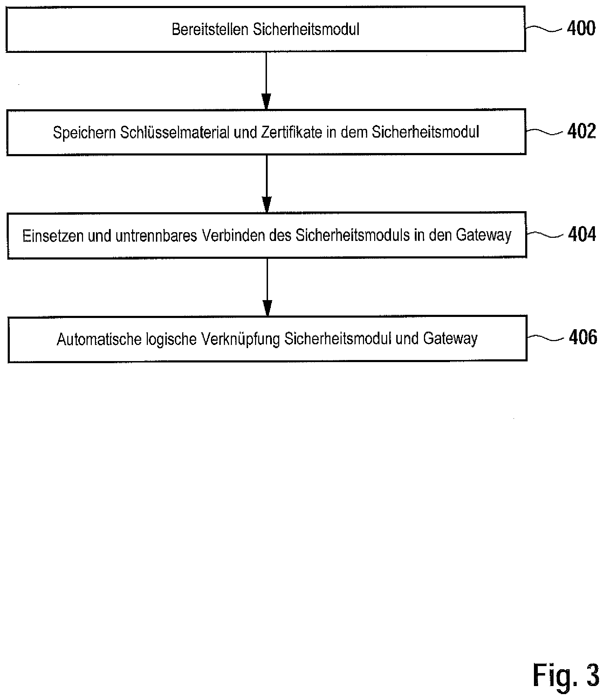

Wie bereits oben erwähnt, sind vorzugsweise das Sicherheitsmodul 100 und der Gateway 138 untrennbar miteinander verbunden. Beispielsweise bilden diese eine bauliche Einheit 140, wie dies in Figur 1 schematisch gezeigt ist. Um diese Einheit 140 zu erzeugen, könnten die in dem Flussdiagramm der Figur 3 erläuterten Verfahrensschritte durchgeführt werden.

In Schritt 400 wird zunächst das Sicherheitsmodul 100 bereitgestellt. Daraufhin erfolgt in Schritt 402 das Speichern von Schlüsselmaterial und von Zertifikaten in dem Sicherheitsmodul. Beispielsweise könnte hierzu das Sicherheitsmodul eine entsprechende kryptografische Einheit aufweisen, mittels welcher selbständig der private Schlüssel 106 erzeugt wird. Alternativ ist es auch möglich, dass die vertrauenswürdige Instanz den privaten Schlüssel erzeugt und in dem Sicherheitsmodul in einem von außen nicht zugänglichen Speicherbereich ablegt. Der zu dem privaten Schlüssel gehörende öffentliche Schlüssel wird dem Zertifikat beigelegt, welches dann durch die vertrauenswürdige Instanz signiert wird und in dem Speicher 102 des Sicherheitsmoduls abgelegt wird.

Daraufhin wird das Sicherheitsmodul in Schritt 404 in das Gateway beispielsweise in Form einer Chipkarte eingesetzt und es wird ein untrennbares Verbinden von Sicherheitsmodul und Gateway vorgenommen. Beispielsweise könnten Sicherheitsmodul und Gateway elektronisch so aneinander gekoppelt werden, dass ein Entfernen des Sicherheitsmoduls vom Gateway zum automatischen Zerstören des Sicherheitsmoduls führen würde.

Nach Einsetzen des Sicherheitsmoduls in den Gateway 404 erfolgt im Schritt 406 eine automatische logische Verknüpfung von Sicherheitsmodul 100 und Gateway 138. Beispielsweise könnte dies dadurch erfolgen, dass die GUID 108 des Sicherheitsmoduls irreversibel in den Speicher 136 des Gateways 138 als GUID 128 geschrieben wird. Hierbei sollte seitens zum Beispiel des Sicherheitsmoduls 100 sichergestellt sein, dass eine Kommunikation mit dem Gateway 138 zur Bereitstellung von Messdatenelementen und über den Energieversorger 166 nur dann stattfindet, wenn eine Identität der GUID 108 und 128 gegeben ist.

### Bezugszeichenliste

- 100: Sicherheitsmodul
- 102: Speicher
- 104: Zertifikat
- 106: privater Schlüssel
- 108: GUID
- 110: Prozessor
- 112: kryptographisches Protokoll
- 114: Ende-zu-Ende-Verschlüsselung
- 116: Interface
- 118: Interface
- 120: Datenübermittlung
- 122: Datenerfassung
- 124: Messdaten
- 125: Berechtigung
- 126: Prozessor
- 128: GUID
- 130: Anwendung
- 132: Anwendung
- 134: Anwendung
- 136: Speicher
- 138: Speicher
- 140: Einheit
- 142: Smart-Meter
- 144: Smart-Meter
- 146: Smart-Meter
- 148: Smart-Meter
- 150: vertrauenswürdige Instanz
- 152: Speicher
- 154: Zertifikat
- 156: privater Schlüssel
- 158: Prozessor
- 164: Interface
- 166: Energieversorger
- 168: Speicher
- 170: Zertifikat
- 172: privater Schlüssel
- 174: Anwendung
- 176: Messdaten
- 178: Prozessor
- 180: Datenerfassung
- 182: Verbrauchsabrechnung
- 186: Interface
- 188: Kommunikationsverbindung
- 190: Kommunikationsverbindung
- 192: Kommunikationsverbindung

## Patentansprüche

1. Verfahren zur Initialisierung eines Speicherbereichs (136), wobei der Speicherbereich (136) einem Smart Meter (142; 144; 146; 148) zugeordnet ist, wobei das Verfahren auf einem ersten Computersystem (150) umfasst:
- Aufbau eines ersten Kommunikationskanals zwischen dem ersten Computersystem (150) und einem Sicherheitsmodul (100), wobei das Sicherheitsmodul (100) dem Speicherbereich (136) zugeordnet ist, wobei das erste Computersystem (150) einem über ein Netzwerk verbundenen Satz von Computersystemen zugeordnet ist,
- Authentifizierung des ersten Computersystems (150) gegenüber dem Sicherheitsmodul (100),
- Senden von Daten von dem ersten Computersystem (150) an das Sicherheitsmodul (100) durch eine gesicherte Übertragung zur Speicherung der Daten durch das Sicherheitsmodul (100) in dem Speicherbereich (136) zur Initialisierung des Speicherbereichs (136) nach erfolgreicher Authentifizierung des ersten Computersystems (150) gegenüber dem Sicherheitsmodul (100), wobei durch die gesendeten Daten ein zweites Computersystem (166) eines Energieversorgers und/oder Messstellenbetreibers spezifiziert wird, wobei durch die Spezifikation der Freischaltung einer Kommunikation zwischen dem Sicherheitsmodul (100) und dem zweiten Computersystem (166) unter Umgehung des ersten Computersystems (150) freigeschaltet wird, wobei das zweite Computersystem (166) ein Computersystem aus dem Satz von Computersystemen ist,
wobei sowohl vor, als auch nach der Initialisierung des Speicherbereichs ausschließlich für das erste Computersystem (150) des Satzes von Computersystemen ein konfigurierender Schreibzugriff auf den Speicherbereich (136) möglich ist, und
wobei
- der Speicherbereich (136) und das Sicherheitsmodul (100) in dem Smart Meter (142; 144; 146; 148) enthalten sind oder
der Speicherbereich (136) und das Sicherheitsmodul (100) in einem Smart Meter Gateway (138) enthalten sind, wobei das Smart Meter (142; 144; 146; 148) an den Smart Meter Gateway (138) ankoppelbar ist,
- dem Smart Meter Konfigurationsdaten zum Betrieb des Smart Meters und/oder des Gateways zugeordnet sind, wobei durch das Smart Meter (142; 144; 146; 148) energieverbrauchsspezifische Messdatenelemente erfassbar sind, wobei die von dem ersten Computersystem (150) gesendeten Daten eine Angabe (125) derjenigen Messdatenelemente und/oder Konfigurationsdaten beinhaltet, für welche der Energieversorger und/oder der Messstellenbetreiber für einen Lesezugriff berechtigt ist,
- die von dem ersten Computersystem (150) gesendeten Daten eine Angabe (125) über die zeitliche Frequenz einer Erfassung der Messdatenelemente durch das Smart Meter (142; 144; 146; 148) und/oder eine Angabe (125) über die zeitliche Frequenz der Übermittlung der Messdatenelemente und/oder Konfigurationsdaten an das zweite Computersystem (166) beinhalten,
- die von dem ersten Computersystem (150) gesendeten Daten eine Energieerfassungsanwendung (130; 132; 134; 174) umfassen, wobei dem Smart Meter und/oder dem Gateway die Angabe (125) in Form der Energieerfassungsanwendung (130; 132; 134; 174) zugeordnet ist,
- die von dem ersten Computersystem (150) in den gesendeten Daten enthaltene Angabe (125) in der Energieerfassungsanwendung enthalten ist, wobei die Energieerfassungsanwendung (130; 132; 134; 174) dazu ausgebildet ist, den Zugriff des zweiten Computersystems (166) auf die Messdatenelemente und/oder Konfigurationsdaten anhand der Angabe (125) zu überwachen.

2. Verfahren zur Initialisierung eines Speicherbereichs (136) nach Anspruch 1, wobei
- die Initialisierung der Ermöglichung einer Kommunikation des Sicherheitsmoduls (100) mit weiteren Computersystemen (166) des Satzes von Computersystemen dient, wobei vor der Initialisierung des Speicherbereichs (136) ausschließlich für das erste Computersystem (150) des Satzes von Computersystemen eine erfolgreiche Authentifizierung gegenüber dem Sicherheitsmodul (100) möglich ist,
- die von dem ersten Computersystem (150) durch das Sicherheitsmodul (100) empfangenen Daten in dem Speicherbereich (136) zur Initialisierung des Speicherbereichs (136) gespeichert werden, wobei erst aufgrund der gespeicherten Daten eine Kommunikation eines zweiten Computersystems (166) eines Energieversorgers und/oder Messstellenbetreibers und dem Sicherheitsmodul (100) unter Umgehung des ersten Computersystems (150) ermöglicht wird.

3. Verfahren nach einem der vorigen Ansprüche 2, wobei die gesicherte Übertragung durch eine Ende-zu-Ende Verschlüsselung zwischen dem ersten Computersystem (150) und dem Sicherheitsmodul (100) erfolgt und/oder wobei die Authentifizierung des ersten Computersystems (150) gegenüber dem Sicherheitsmodul (100) mit Hilfe eines ersten Zertifikats (154) des ersten Computersystems (150) erfolgt.

4. Verfahren nach Anspruch 3, wobei vor der Initialisierung des Speicherbereichs (136) ausschließlich bei Vorliegen des ersten Zertifikats (154) die erfolgreiche Authentifizierung gegenüber dem Sicherheitsmodul (100) möglich ist.

5. Verfahren nach einem der vorigen Ansprüche, wobei erst durch die Speicherung der Daten in dem Speicherbereich (136) zur Initialisierung des Speicherbereichs (136) das Sicherheitsmodul für eine Kommunikation mit dem zweiten Computersystem (166) freigeschaltet wird, wobei durch die in dem Speicherbereich gespeicherten Daten selbst die Kommunikation mit dem zweiten Computersystem (166) freigeschaltet wird und/oder wobei die Authentifizierung ein Challenge-Response-Verfahren umfasst.

6. Verfahren nach einem der vorherigen Ansprüche, wobei die von dem ersten Computersystem (150) empfangenen Daten eine Angabe (125) derjenigen Messdatenelemente und/oder Konfigurationsdaten beinhaltet, welche durch den Smart Meter oder das Gateway unter Verwendung des Sicherheitsmoduls an das zweite Computersystem (166) übermittelt werden.

7. Verfahren nach einem der vorigen Ansprüche, ferner mit den folgenden Schritten:
- Aufbau eines dritten Kommunikationskanals zwischen dem zweiten Computersystem (166) und dem ersten Computersystem (150),
- Authentifizierung des zweiten Computersystems (166) gegenüber dem ersten Computersystem (150),
- Nach erfolgreicher Authentifizierung des zweiten Computersystems (166) gegenüber dem ersten Computersystem (150), Empfang einer Anforderung zur Initialisierung des Speicherbereichs (136) von dem zweiten Computersystem (166) durch das erste Computersystem, wobei die Anforderung eine Kennung (108; 128) des Speicherbereichs (136) umfasst, wobei die Kennung (108; 128) den Speicherbereich (136) eindeutig identifiziert.

8. Sicherheitsmodul (100), wobei das Sicherheitsmodul (100) einem Speicherbereich (136) zuordenbar ist, wobei der Speicherbereich (136) einem Smart Meter (142; 144; 146; 148) zuordenbar ist, wobei das Sicherheitsmodul (100) zur Initialisierung des Speicherbereichs (136) ausgebildet ist, wobei das Sicherheitsmodul (100) ferner aufweist:
- Mittel zum Aufbau eines ersten Kommunikationskanals mit einem ersten Computersystem (150), wobei das erste Computersystem (150) einem über ein Netzwerk verbundenen Satz von Computersystemen zugeordnet ist,
- Mittel (112) zur Authentifizierung des ersten Computersystems (150) gegenüber dem Sicherheitsmodul (100), wobei die Initialisierung der Ermöglichung einer Kommunikation des Sicherheitsmoduls (100) mit weiteren Computersystemen (166) des Satzes von Computersystemen dient, wobei das Sicherheitsmodul (100) so ausgebildet ist, dass vor der Initialisierung des Speicherbereichs (136) ausschließlich für das erste Computersystem (150) des Satzes von Computersystemen eine erfolgreiche Authentifizierung gegenüber dem Sicherheitsmodul (100) möglich ist,
- Mittel (116) zum Empfang von Daten von dem ersten Computersystem (150) durch das Sicherheitsmodul (100) durch eine gesicherte Übertragung und Speicherung der Daten in dem Speicherbereich (136) zur Initialisierung des Speicherbereichs (136) nach erfolgreicher Authentifizierung des ersten Computersystems (150) gegenüber dem Sicherheitsmodul (100), wobei das Sicherheitsmodul (100) so ausgebildet ist, dass erst aufgrund der gespeicherten Daten eine Kommunikation eines zweiten Computersystems (166) eines Energieversorgers und/oder Messstellenbetreibers und dem Sicherheitsmodul (100) unter Umgehung des ersten Computersystems (150) ermöglicht wird, wobei das zweite Computersystem (166) ein Computersystem aus dem Satz von Computersystemen ist,
wobei sowohl vor, als auch nach der Initialisierung des Speicherbereichs ausschließlich für das erste Computersystem (150) des Satzes von Computersystemen ein konfigurierender Schreibzugriff auf den Speicherbereich (136) möglich ist, und
wobei
- der Speicherbereich (136) und das Sicherheitsmodul (100) in dem Smart Meter (142; 144; 146; 148) enthalten sind oder
der Speicherbereich (136) und das Sicherheitsmodul (100) in einem Smart Meter Gateway (138) enthalten sind, wobei das Smart Meter (142; 144; 146; 148) an den Smart Meter Gateway (138) ankoppelbar ist,
- dem Smart Meter Konfigurationsdaten zum Betrieb des Smart Meters und/oder des Gateways zugeordnet sind, wobei durch das Smart Meter (142; 144; 146; 148) energieverbrauchsspezifische Messdatenelemente erfassbar sind, wobei die von dem ersten Computersystem (150) gesendeten Daten eine Angabe (125) derjenigen Messdatenelemente und/oder Konfigurationsdaten beinhaltet, für welche der Energieversorger und/oder der Messstellenbetreiber für einen Lesezugriff berechtigt ist,
- die von dem ersten Computersystem (150) gesendeten Daten eine Angabe (125) über die zeitliche Frequenz einer Erfassung der Messdatenelemente durch das Smart Meter (142; 144; 146; 148) und/oder eine Angabe (125) über die zeitliche Frequenz der Übermittlung der Messdatenelemente und/oder Konfigurationsdaten an das zweite Computersystem (166) beinhalten,
- die von dem ersten Computersystem (150) gesendeten Daten eine Energieerfassungsanwendung (130; 132; 134; 174) umfassen, wobei dem Smart Meter und/oder dem Gateway die Angabe (125) in Form der Energieerfassungsanwendung (130; 132; 134; 174) zugeordnet ist,
- die von dem ersten Computersystem (150) in den gesendeten Daten enthaltene Angabe (125) in der Energieerfassungsanwendung enthalten ist, wobei die Energieerfassungsanwendung (130; 132; 134; 174) dazu ausgebildet ist, den Zugriff des zweiten Computersystems (166) auf die Messdatenelemente und/oder Konfigurationsdaten anhand der Angabe (125) zu überwachen.

9. Erstes Computersystem zur Initialisierung eines Speicherbereichs (136), wobei der Speicherbereich (136) einem Smart Meter (142; 144; 146; 148) zugeordnet ist, wobei das erste Computersystem (150) umfasst:
- Mittel zum Aufbau eines ersten Kommunikationskanals zwischen dem ersten Computersystem (150) und einem Sicherheitsmodul (100), wobei das Sicherheitsmodul (100) dem Speicherbereich (136) zugeordnet ist, wobei das erste Computersystem (150) einem über ein Netzwerk verbundenen Satz von Computersystemen zugeordnet ist,
- Mittel (112) zur Authentifizierung des ersten Computersystems (150) gegenüber dem Sicherheitsmodul (100),
- Mittel (164) zum Senden von Daten von dem ersten Computersystem (150) an das Sicherheitsmodul (100) durch eine gesicherte Übertragung zur Speicherung der Daten durch das Sicherheitsmodul (100) in dem Speicherbereich (136) zur Initialisierung des Speicherbereichs (136) nach erfolgreicher Authentifizierung des ersten Computersystems (150) gegenüber dem Sicherheitsmodul (100), wobei durch die gesendeten Daten ein zweites Computersystem (166) eines Energieversorgers und/oder Messstellenbetreibers spezifiziert wird, wobei die Spezifikation der Freischaltung einer Kommunikation zwischen dem Sicherheitsmodul (100) und dem zweiten Computersystem (166) unter Umgehung des ersten Computersystems (150) dient, wobei das zweite Computersystem (166) ein Computersystem aus dem Satz von Computersystemen ist,
wobei sowohl vor, als auch nach der Initialisierung des Speicherbereichs ausschließlich für das erste Computersystem (150) des Satzes von Computersystemen ein konfigurierender Schreibzugriff auf den Speicherbereich (136) möglich ist, und
wobei
- der Speicherbereich (136) und das Sicherheitsmodul (100) in dem Smart Meter (142; 144; 146; 148) enthalten sind oder
der Speicherbereich (136) und das Sicherheitsmodul (100) in einem Smart Meter Gateway (138) enthalten sind, wobei das Smart Meter (142; 144; 146; 148) an den Smart Meter Gateway (138) ankoppelbar ist,
- dem Smart Meter Konfigurationsdaten zum Betrieb des Smart Meters und/oder des Gateways zugeordnet sind, wobei durch das Smart Meter (142; 144; 146; 148) energieverbrauchsspezifische Messdatenelemente erfassbar sind, wobei die von dem ersten Computersystem (150) gesendeten Daten eine Angabe (125) derjenigen Messdatenelemente und/oder Konfigurationsdaten beinhaltet, für welche der Energieversorger und/oder der Messstellenbetreiber für einen Lesezugriff berechtigt ist,
- die von dem ersten Computersystem (150) gesendeten Daten eine Angabe (125) über die zeitliche Frequenz einer Erfassung der Messdatenelemente durch das Smart Meter (142; 144; 146; 148) und/oder eine Angabe (125) über die zeitliche Frequenz der Übermittlung der Messdatenelemente und/oder Konfigurationsdaten an das zweite Computersystem (166) beinhalten,
- die von dem ersten Computersystem (150) gesendeten Daten eine Energieerfassungsanwendung (130; 132; 134; 174) umfassen, wobei dem Smart Meter und/oder dem Gateway die Angabe (125) in Form der Energieerfassungsanwendung (130; 132; 134; 174) zugeordnet ist,
- die von dem ersten Computersystem (150) in den gesendeten Daten enthaltene Angabe (125) in der Energieerfassungsanwendung enthalten ist, wobei die Energieerfassungsanwendung (130; 132; 134; 174) dazu ausgebildet ist, den Zugriff des zweiten Computersystems (166) auf die Messdatenelemente und/oder Konfigurationsdaten anhand der Angabe (125) zu überwachen.

10. Computerprogrammprodukt mit von einem Prozessor ausführbaren Instruktionen zur Durchführung der Verfahrensschritte gemäß einem der vorigen Ansprüche 1-7.

## Claims

1. A method for initialising a memory area (136), wherein the memory area (136) is associated with a smart meter (142; 144; 146; 148), wherein the method on a first computer system (150) comprises:
- establishing a first communication channel between the first computer system (150) and a security module (100), wherein the security module (100) is associated with the memory area (136), wherein the first computer system (150) is associated with a set of computer systems connected via a network,
- authenticating the first computer system (150) to the security module (100),
- sending of data by the first computer system (150) to the security module (100) by a secure transmission for storage of the data by the security module (100) in the memory area (136) for initialisation of the memory area (136) after successful authentication of the first computer system (150) to the security module (100), wherein, by means of the transmitted data, a second computer system (166) of a utility company and/or metering point operator is specified, wherein, by means of the specification, communication is released between the security module (100) and the second computer system (166) with bypassing of the first computer system (150), wherein the second computer system (166) is a computer system from the set of computer systems,
wherein, both before and after the initialisation of the memory area, configuring write access to the memory area (136) is possible only for the first computer system (150) of the set of computer systems, and
wherein
- the memory area (136) and the security module (100) are contained in the smart meter (142; 144; 146; 148) or the memory area (136) and the security module (100) are contained in a smart meter gateway (138), wherein the smart meter (142; 144; 146; 148) can be coupled to the smart meter gateway (138),
- the smart meter is associated with configuration data for operating the smart meter and/or the gateway, wherein, by means of the smart meter (142; 144; 146; 148), energy consumption-specific measurement data elements can be acquired, wherein the data sent by the first computer system (150) contains a statement (125) of those measurement data elements and/or configuration data to which the utility company and/or the metering point operator are/is authorised for read access,
- the data sent by the first computer system (150) contains a statement (125) concerning the chronological frequency of an acquisition of the measurement data elements by the smart meter (142; 144; 146; 148) and/or a statement (125) concerning the chronological frequency of the transmission of the measurement data elements and/or configuration data to the second computer system (166),
- the data sent by the first computer system (150) comprise an energy acquisition application (130; 132; 134; 174), wherein the smart meter and/or the gateway are/is associated with the statement (125) in the form of the energy acquisition application (130; 132; 134; 174),
- the statement (125) contained in the sent data from the first computer system (150) is contained in the energy acquisition application, wherein the energy acquisition application (130; 132; 134; 174) is designed to monitor the access by the second computer system (166) to the measurement data elements and/or configuration data on the basis of the statement (125).

2. The method for initialising a memory area (136) according to claim 1, wherein
- the initialisation is used to enable communication between the security module (100) and further computer systems (166) of the set of computer systems, wherein, prior to the initialisation of the memory area (136), successful authentication to the security module (100) is possible only for the first computer system (150) of the set of computer systems,
- the data received by the security module (100) from the first computer system (150) is stored in the memory area (136) for initialisation of the memory area (136), wherein only on the basis of the stored data is communication enabled between a second computer system (166) of a utility company and/or metering point operator and the security module (100) with bypassing of the first computer system (150).

3. The method according to either one of the preceding claims 1 or 2, wherein the secure transmission is achieved by an end-to-end encryption between the first computer system (150) and the security module (100) and/or wherein the authentication of the first computer system (150) to the security module (100) is achieved with the aid of a first certificate (154) of the first computer system (150).

4. The method according to claim 3, wherein, prior to the initialisation of the memory area (136), successful authentication to the security module (100) is possible only when the first certificate (154) is present.

5. The method according to any one of the preceding claims, wherein only as a result of the storage of the data in the memory area (136) for initialisation of the memory area (136) is the security module released for communication with the second computer system (166), wherein, as a result of the data itself stored in the memory area, communication with the second computer system (166) is released and/or wherein the authentication comprises a challenge-response process.

6. The method according to any one of the preceding claims, wherein the data received from the first computer system (150) contains a statement (125) of those measurement data elements and/or configuration data which are transmitted to the second computer system (166) by the smart meter or the gateway with use of the security module.

7. The method according to any one of the preceding claims, further comprising the following steps:
- establishing a third communication channel between the second computer system (166) and the first computer system (150),
- authenticating the second computer system (166) to the first computer system (150),
- following successful authentication of the second computer system (166) to the first computer system (150), receiving a request for initialisation of the memory area (136) from the second computer system (166) by the first computer system, wherein the request comprises an identification (108; 128) of the memory area (136), wherein the identification (108; 128) uniquely identifies the memory area (136).

8. A security module (100), wherein the security module (100) can be associated with a memory area (136), wherein the memory area (136) can be associated with a smart meter (142; 144; 146; 148), wherein the security module (100) is designed for initialisation of the memory area (136), wherein the security module (100) also comprises:
- means for establishing a first communication channel with a first computer system (150), wherein the first computer system (150) is associated with a set of computer systems connected via a network,
- means (112) for authenticating the first computer system (150) to the security module (100), wherein the initialisation is used to enable communication between the security module (100) and further computer systems (166) of the set of computer systems, wherein the security module (100) is designed such that, prior to the initialisation of the memory area (136), successful authentication to the security module (100) is possible only for the first computer system (150) of the set of computer systems,
- means (116) for receiving data from the first computer system (150) by the security module (100) by means of a secure transmission and storage of the data in the memory area (136) for initialisation of the memory area (136) following successful authentication of the first computer system (150) to the security module (100), wherein the security module (100) is designed such that only on the basis of the stored data is communication enabled between a second computer system (166) of a utility company and/or metering point operator and the security module (100) with bypassing of the first computer system (150), wherein the second computer system (166) is a computer system from the set of computer systems,
wherein, both before and after the initialisation of the memory area, configuring write access to the memory area (136) is possible only for the first computer system (150) of the set of computer systems, and
wherein
- the memory area (136) and the security module (100) are contained in the smart meter (142; 144; 146; 148) or the memory area (136) and the security module (100) are contained in a smart meter gateway (138), wherein the smart meter (142; 144; 146; 148) can be coupled to the smart meter gateway (138),
- the smart meter is associated with configuration data for operating the smart meter and/or the gateway, wherein, by means of the smart meter (142; 144; 146; 148), energy consumption-specific measurement data elements can be acquired, wherein the data sent by the first computer system (150) contains a statement (125) of those measurement data elements and/or configuration data to which the utility company and/or the metering point operator are/is authorised for read access,
- the data sent by the first computer system (150) contains a statement (125) concerning the chronological frequency of an acquisition of the measurement data elements by the smart meter (142; 144; 146; 148) and/or a statement (125) concerning the chronological frequency of the transmission of the measurement data elements and/or configuration data to the second computer system (166);
- the data sent by the first computer system (150) comprise an energy acquisition application (130; 132; 134; 174), wherein the smart meter and/or the gateway are/is associated with the statement (125) in the form of the energy acquisition application (130; 132; 134; 174),
- the statement (125) contained in the sent data from the first computer system (150) is contained in the energy acquisition application, wherein the energy acquisition application (130; 132; 134; 174) is designed to monitor the access by the second computer system (166) to the measurement data elements and/or configuration data on the basis of the statement (125).

9. A first computer system for initialising a memory area (136), wherein the memory area (136) is associated with a smart meter (142; 144; 146; 148), wherein the first computer system (150) comprises:
- means for establishing a first communication channel between the first computer system (150) and a security module (100), wherein the security module (100) is associated with the memory area (136), wherein the first computer system (150) is associated with a set of computer systems connected via a network,
- means (112) for authenticating the first computer system (150) to the security module (100),
- means (116) for sending data from the first computer system (150) to the security module (100) by means of a secure transmission for storage of the data by the security module (100) in the memory area (136) for initialisation of the memory area (136) following successful authentication of the first computer system (150) to the security module (100), wherein a second computer system (166) of a utility company and/or a metering point operator is specified by the sent data, wherein the specification is used to release communication between the security module (100) and the second computer system (166) with bypassing of the first computer system (150), wherein the second computer system (166) is a computer system from the set of computer systems,
wherein, both before and after the initialisation of the memory area, configuring write access to the memory area (136) is possible only for the first computer system (150) of the set of computer systems, and
wherein
- the memory area (136) and the security module (100) are contained in the smart meter (142; 144; 146; 148) or the memory area (136) and the security module (100) are contained in a smart meter gateway (138), wherein the smart meter (142; 144; 146; 148) can be coupled to the smart meter gateway (138),
- the smart meter is associated with configuration data for operating the smart meter and/or the gateway, wherein, by means of the smart meter (142; 144; 146; 148), energy consumption-specific measurement data elements can be acquired, wherein the data sent by the first computer system (150) contains a statement (125) of those measurement data elements and/or configuration data to which the utility company and/or the metering point operator are/is authorised for read access,
- the data sent by the first computer system (150) contains a statement (125) concerning the chronological frequency of an acquisition of the measurement data elements by the smart meter (142; 144; 146; 148) and/or a statement (125) concerning the chronological frequency of the transmission of the measurement data elements and/or configuration data to the second computer system (166);
- the data sent by the first computer system (150) comprise an energy acquisition application (130; 132; 134; 174), wherein the smart meter and/or the gateway are/is associated with the statement (125) in the form of the energy acquisition application (130; 132; 134; 174),
- the statement (125) contained in the sent data from the first computer system (150) is contained in the energy acquisition application, wherein the energy acquisition application (130; 132; 134; 174) is designed to monitor the access by the second computer system (166) to the measurement data elements and/or configuration data on the basis of the statement (125).

10. A computer program product with instructions executable by a processor for carrying out the method steps according to any one of preceding claims 1 to 7.

## Revendications

1. Procédé d'initialisation d'une zone de mémoire (136), la zone de mémoire (136) étant associée à un compteur intelligent (142 ; 144 ; 146 ; 148), le procédé comprenant, sur un premier système informatique (150) :
- l'établissement d'un premier canal de communication entre le premier système informatique (150) et un module de sécurité (100), où le module de sécurité (100) est associé à la zone de mémoire (136), où le premier système informatique (150) est associé à un ensemble de systèmes informatiques reliés par le biais d'un réseau,
- l'authentification du premier système informatique (150) vis-à-vis du module de sécurité (100),
- l'envoi de données du premier système informatique (150) vers le module de sécurité (100) par une connexion sécurisée pour le stockage des données par le module de sécurité (100) dans la zone de mémoire (136) pour l'initialisation de la zone de mémoire (136) après une authentification réussie du premier système informatique (150) vis-à-vis du module de sécurité (100), où un deuxième système informatique (166) d'un fournisseur d'énergie et/ou d'un gestionnaire de compteurs est spécifié par les données envoyées, où, par la spécification de l'activation, une communication entre le module de sécurité (100) et le deuxième système informatique (166) est déclenchée moyennant le contournement du premier système informatique (150), où le deuxième système informatique (166) est un système informatique provenant de l'ensemble des systèmes informatiques,
où, à la fois avant et également après l'initialisation de la zone de mémoire, un accès d'écriture configuré pour la zone de mémoire (136) est possible exclusivement pour le premier système informatique (150) de l'ensemble des systèmes informatiques, et
où
- la zone de mémoire (136) et le module de sécurité (100) sont contenus dans le compteur intelligent (142 ; 144 ; 146 ; 148), ou
la zone de mémoire (136) et le module de sécurité (100) sont contenus dans une passerelle de compteur intelligent (138), le compteur intelligent (142 ; 144 ; 146 ; 148) pouvant être couplé à la passerelle de compteur intelligent (138),
- des données de configuration pour le fonctionnement du compteur intelligent et/ou de la passerelle sont associées au compteur intelligent, ce par quoi, des éléments de données de mesure spécifiques à la consommation d'énergie peuvent être saisis par le compteur intelligent (142 ; 144 ; 146 ; 148), les données envoyées à partir du premier système informatique (150) contenant une indication (125) des éléments de données de mesure et/ou des données de configuration en question pour lesquels le fournisseur d'énergie et/ou le gestionnaire de compteurs est habilité pour un accès en lecture,
- les données envoyées à partir du premier système informatique (150) contiennent une indication (125) concernant la fréquence dans le temps d'une saisie des éléments de données de mesure par le compteur intelligent (142 ; 144 ; 146 ; 148) et/ou une indication (125) concernant la fréquence dans le temps de la transmission des éléments de données de mesure et/ou des données de configuration vers le deuxième système informatique (166),
- les données envoyées à partir du premier système informatique (150) comprennent une application de saisie d'énergie (130 ; 132 ; 134 ; 174), où l'indication (125) est associée au compteur intelligent et/ou à la passerelle sous la forme de l'application de saisie d'énergie (130 ; 132 ; 134 ; 174),
- l'indication (125) contenue dans les données envoyées à partir du premier système informatique (150) est contenue dans l'application de saisie d'énergie, où l'application de saisie d'énergie (130 ; 132 ; 134 ; 174) est conçue pour surveiller l'accès du deuxième système informatique (166) aux éléments de données de mesure et/ou aux données de configuration à l'aide de l'indication (125).

2. Procédé d'initialisation d'une zone de mémoire (136) selon la revendication 1, dans lequel
- l'initialisation sert à permettre une communication du module de sécurité (100) avec d'autres systèmes informatiques (166) de l'ensemble des systèmes informatiques, où, avant l'initialisation de la zone de mémoire (136), une authentification réussie vis-à-vis du module de sécurité (100) est possible exclusivement pour le premier système informatique (150) de l'ensemble de systèmes informatiques,
- les données reçues à partir du premier système informatique (150) par le module de sécurité (100) sont stockées dans la zone de mémoire (136) pour l'initialisation de la zone de mémoire (136), où, uniquement en raison des données stockées, une communication d'un deuxième système informatique (166) d'un fournisseur d'énergie et/ou d'un gestionnaire de compteurs et le module de sécurité (100) est rendue possible moyennant un contournement du premier système informatique (150).

3. Procédé selon l'une des revendications précédentes 2, dans lequel la transmission sécurisée entre le premier système informatique (150) et le module de sécurité (100) a lieu par un cryptage de bout en bout et/ou dans lequel l'authentification du premier système informatique (150) vis-à-vis du module de sécurité (100) a lieu à l'aide d'un premier certificat (154) du premier système informatique (150).

4. Procédé selon la revendication 3, dans lequel l'authentification réussie vis-à-vis du module de sécurité (100) est possible avant l'initialisation de la zone de mémoire (136) exclusivement en cas de présence du premier certificat (154).

5. Procédé selon l'une des revendications précédentes, dans lequel le module de sécurité n'est activé pour une communication avec le deuxième système informatique (166) que par un stockage des données dans la zone de mémoire (136) pour l'initialisation de la zone de mémoire (136), dans lequel la communication elle-même avec le deuxième système informatique (166) est activée par les données stockées dans la zone de mémoire, et/ou dans lequel l'authentification comprend un procédé de défi et de réponse.

6. Procédé selon l'une des revendications précédentes, dans lequel les données reçues à partir du premier système informatique (150) contiennent une indication (125) des éléments de données de mesure et/ou de données de configuration en question, lesquels sont transmis au deuxième système informatique (166) par le compteur intelligent ou la passerelle moyennant l'emploi du module de sécurité.

7. Procédé selon l'une des revendications précédentes, avec en outre les étapes suivantes :
- l'établissement d'un troisième canal de communication entre le deuxième système informatique (166) et le premier système informatique (150),
- l'authentification du deuxième système informatique (166) vis-à-vis du premier système informatique (150),
- après une authentification réussie du deuxième système informatique (166) vis-à-vis du premier système informatique (150), la réception d'une requête pour l'initialisation de la zone de mémoire (136) à partir du deuxième système informatique (166) par le premier système informatique, où la requête comprend un identifiant (108 ; 128) de la zone de mémoire (136), où l'identifiant (108 ; 128) identifie de manière précise la zone de mémoire (136).

8. Module de sécurité (100), où le module de sécurité (100) peut être associé à une zone de mémoire (136), la zone de mémoire (136) pouvant être associée à un compteur intelligent (142 ; 144 ; 146 ; 148), où le module de sécurité (100) est conçu pour l'initialisation de la zone de mémoire (136), où le module de sécurité (100) présente en outre :
- des moyens pour l'établissement d'un premier canal de communication avec un premier système informatique (150), où le premier système informatique (150) est associé à un ensemble de systèmes informatiques reliés par le biais d'un réseau,
- des moyens (112) pour l'authentification du premier système informatique (150) vis-à-vis du module de sécurité (100), où l'initialisation sert à la possibilité d'établir une communication du module de sécurité (100) avec d'autres systèmes informatiques (166) de l'ensemble de systèmes informatiques, où le module de sécurité (100) est conçu de telle manière qu'avant l'initialisation de la zone de mémoire (136), une authentification réussie vis-à-vis du module de sécurité (100) est possible exclusivement pour le premier système informatique (150) de l'ensemble de systèmes informatiques,
- des moyens (116) pour la réception de données à partir du premier système informatique (150) par le module de sécurité (100) par une transmission sécurisée et le stockage des données dans la zone de mémoire (136) pour l'initialisation de la zone de mémoire (136) après une authentification réussie du premier système informatique (150) vis-à-vis du module de sécurité (100), où le module de sécurité (100) est conçu de manière qu'une communication entre un deuxième système informatique (166) d'un fournisseur d'énergie et/ou d'un gestionnaire de compteurs et le module de sécurité (100) est rendue possible uniquement en raison des données stockées moyennant un contournement du premier système informatique (150), où le deuxième système informatique (166) est un système informatique de l'ensemble de systèmes informatiques,
où, à la fois avant et également après l'initialisation de la zone de mémoire, un accès d'écriture configuré pour la zone de mémoire (136) est possible exclusivement pour le premier système informatique (150) de l'ensemble des systèmes informatiques, et
où
- la zone de mémoire (136) et le module de sécurité (100) sont contenus dans le compteur intelligent (142 ; 144 ; 146 ; 148), ou
la zone de mémoire (136) et le module de sécurité (100) sont contenus dans une passerelle de compteur intelligent (138), le compteur intelligent (142 ; 144 ; 146 ; 148) pouvant être couplé à la passerelle de compteur intelligent (138),
- des données de configuration pour le fonctionnement du compteur intelligent et/ou de la passerelle sont associées au compteur intelligent, ce par quoi, des éléments de données de mesure spécifiques à la consommation d'énergie peuvent être saisis par le compteur intelligent (142 ; 144 ; 146 ; 148), où les données envoyées à partir du premier système informatique (150) contiennent une indication (125) des éléments de données de mesure et/ou des données de configuration en question pour lesquels le fournisseur d'énergie et/ou le gestionnaire de compteurs est habilité pour un accès en lecture,
- les données envoyées à partir du premier système informatique (150) contiennent une indication (125) concernant la fréquence dans le temps d'une saisie des éléments de données de mesure par le compteur intelligent (142 ; 144 ; 146 ; 148) et/ou une indication (125) concernant la fréquence dans le temps de la transmission des éléments de données de mesure et/ou des données de configuration vers le deuxième système informatique (166),
- les données envoyées du premier système informatique (150) comprennent une application de saisie d'énergie (130 ; 132 ; 134 ; 174), où l'indication (125) est associée au compteur intelligent et/ou à la passerelle sous la forme de l'application de saisie d'énergie (130 ; 132 ; 134 ; 174),
- l'indication (125) contenue dans les données envoyées à partir du premier système informatique (150) est contenue dans l'application de saisie d'énergie, où l'application de saisie d'énergie (130 ; 132 ; 134 ; 174) est conçue pour surveiller l'accès du deuxième système informatique (166) aux éléments de données de mesure et/ou aux données de configuration à l'aide de l'indication (125).

9. Premier système informatique d'initialisation d'une zone de mémoire (136), la zone de mémoire (136) étant associée à un compteur intelligent (142 ; 144 ; 146 ; 148), où le premier système informatique (150) comprend :
- des moyens pour l'établissement d'un premier canal de communication entre le premier système informatique (150) et un module de sécurité (100), où le module de sécurité (100) est associé à la zone de mémoire (136), où le premier système informatique (150) est associé à un ensemble de systèmes informatiques reliés par le biais d'un réseau,
- des moyens (112) pour l'authentification du premier système informatique (150) vis-à-vis du module de sécurité (100),
- des moyens (164) pour l'envoi de données du premier système informatique (150) vers le module de sécurité (100) par une connexion sécurisée pour le stockage des données par le module de sécurité (100) dans la zone de mémoire (136) en vue de l'initialisation de la zone de mémoire (136) après une authentification réussie du premier système informatique (150) vis-à-vis du module de sécurité (100), où un deuxième système informatique (166) d'un fournisseur d'énergie et/ou d'un gestionnaire de compteurs est spécifié par les données envoyées, où la spécification de l'activation sert à une communication entre le module de sécurité (100) et le deuxième système informatique (166) moyennant le contournement du premier système informatique (150), où le deuxième système informatique (166) est un système informatique provenant de l'ensemble des systèmes informatiques,
où, à la fois avant et également après l'initialisation de la zone de mémoire, un accès d'écriture configuré pour la zone de mémoire (136) est possible exclusivement pour le premier système informatique (150) de l'ensemble des systèmes informatiques, et
où
- la zone de mémoire (136) et le module de sécurité (100) sont contenus dans le compteur intelligent (142 ; 144 ; 146 ; 148), ou
la zone de mémoire (136) et le module de sécurité (100) sont contenus dans une passerelle de compteur intelligent (138), le compteur intelligent (142 ; 144 ; 146 ; 148) pouvant être couplé à la passerelle de compteur intelligent (138),
- des données de configuration pour le fonctionnement du compteur intelligent et/ou de la passerelle sont associées au compteur intelligent, ce par quoi, des éléments de données de mesure spécifiques à la consommation d'énergie peuvent être saisis par le compteur intelligent (142 ; 144 ; 146 ; 148), les données envoyées à partir du premier système informatique (150) contenant une indication (125) des éléments de données de mesure et/ou des données de configuration en question pour lesquels le fournisseur d'énergie et/ou le gestionnaire de compteurs est habilité pour un accès en lecture,
- les données envoyées à partir du premier système informatique (150) contiennent une indication (125) concernant la fréquence dans le temps d'une saisie des éléments de données de mesure par le compteur intelligent (142 ; 144 ; 146 ; 148), et/ou une indication (125) concernant la fréquence dans le temps de la transmission des éléments de données de mesure et/ou des données de configuration vers le deuxième système informatique (166),
- les données envoyées à partir du premier système informatique (150) comprennent une application de saisie d'énergie (130 ; 132 ; 134 ; 174), où l'indication (125) est associée au compteur intelligent et/ou à la passerelle sous la forme de l'application de saisie d'énergie (130 ; 132 ; 134 ; 174),
- l'indication (125) contenue dans les données envoyées à partir du premier système informatique (150) est contenue dans l'application de saisie d'énergie, où l'application de saisie d'énergie (130 ; 132 ; 134 ; 174) est conçue pour surveiller l'accès du deuxième système informatique (166) aux éléments de données de mesure et/ou aux données de configuration à l'aide de l'indication (125).

10. Produit-programme d'ordinateur doté d'instructions exécutables par un processeur pour la réalisation des étapes de procédé selon l'une des revendications précédentes 1 à 7.
